(19) Europäisches Patentamt / European Patent Office / Office européen des brevets

(11) **EP 4 481 584 A1**

(12) **EUROPEAN PATENT APPLICATION**
published in accordance with Art. 153(4) EPC

(43) Date of publication:
25.12.2024 Bulletin 2024/52

(21) Application number: 23859104.4

(22) Date of filing: 09.08.2023

(51) International Patent Classification (IPC):
*G06F 16/335* (2019.01)  *G06F 9/451* (2018.01)

(52) Cooperative Patent Classification (CPC):
G06F 9/451; G06F 16/332; G06F 16/335;
G06F 16/35

(86) International application number:
PCT/CN2023/111959

(87) International publication number:
WO 2024/046069 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 CN 202211058865
20.09.2022 CN 202211145480

(71) Applicant: Huawei Technologies Co., Ltd.
Shenzhen, Guangdong 518129 (CN)

(72) Inventors:
• XING, Chao
  Shenzhen, Guangdong 518129 (CN)
• GAO, Pengju
  Shenzhen, Guangdong 518129 (CN)
• CHEN, Shaojie
  Shenzhen, Guangdong 518129 (CN)
• CHEN, Zhiyong
  Shenzhen, Guangdong 518129 (CN)

(74) Representative: Pfenning, Meinig & Partner mbB
Patent- und Rechtsanwälte
Theresienhöhe 11a
80339 München (DE)

(54) **MESSAGE PUSHING METHOD, TERMINAL AND COMMUNICATION SYSTEM**

(57) This application discloses a message push method, a terminal, and a communication system. The method includes: The terminal sends user behavior information. The terminal receives a message pushed by a server, where the message includes target article information and first data, and the target article information and the first data are related to the user behavior information. The terminal displays, on a first interface, content of the target article information and recommendation information corresponding to the first data. The terminal sends a request of an identifier of the message to the server in response to a first operation on the first interface. The server obtains, based on the request, content of a target article and second data related to the first data. The terminal receives the content of the target article and the second data that are sent by the server. The terminal displays, on a second interface, the content of the target article and the second data that is displayed by using a display template corresponding to the second data. In this way, when displaying the target article, the terminal may display a reason for recommending the target article, so that the recommended article is interpretable. This improves reliability of a recommendation message.

FIG. 3A

**Description**

This application claims priority to Chinese Patent Application No. 202211058865.4, filed with the China National Intellectual Property Administration on August 31, 2022 and entitled "MESSAGE PUSH METHOD, TERMINAL, AND COMMUNICATION SYSTEM", which is incorporated herein by reference in its entirety.

In addition, this application claims priority to Chinese Patent Application No. 202211145480.1, filed with the China National Intellectual Property Administration on September 20, 2022 and entitled "MESSAGE PUSH METHOD, TERMINAL, AND COMMUNICATION SYSTEM", which is incorporated herein by reference in its entirety.

**TECHNICAL FIELD**

Embodiments of this application relate to the field of communication technologies, and in particular, to a message push method, a terminal, and a communication system.

**BACKGROUND**

With rapid development of communication technologies, an application on a terminal may receive push messages (or referred to as push messages) sent by another device. The push messages have the following features: 1. The push messages are pushed to attract new users of the application and promote activities of the application, to remind the user to use the application. 2. A large quantity of push messages are pushed. Generally, push messages are pushed to devices corresponding to hundreds of millions of users every day. 3. A push of the push messages is focused more on message categories (such as hot topics and current events). Therefore, inaccurate messages pushed to a user may cause antipathy of the user and reduce user experience.

**SUMMARY**

According to a message push method, a terminal, and a communication system provided in embodiments of this application, it can be ensured that all push messages are interpretable, and a message of an interpretable category may be selected for pushing. A message pushed to a user can better meet a personalized requirement of the user. This implements a personalized push and enables a message push to be more accurate.

To achieve the foregoing objectives, the following technical solutions are used in embodiments of this application.

According to a first aspect, an embodiment of this application provides a message push method. The method may be performed by a terminal, or may be performed by a component (for example, a chip, a chip system, or a processor) located in the terminal. The following uses an example in which the method is performed by the terminal for description. The method includes: The terminal sends user behavior information of a user to a server. The terminal receives a first message sent by the server, where the first message includes target article information and first data, and the first data includes a recommendation reason field. The target article information is determined by the server based on the user behavior information, and the first data is related to the target article information and the user behavior information. The terminal displays a first interface, where the first interface includes a first recommendation, the first recommendation includes first content and recommendation information corresponding to the first data, and the first content is obtained based on the target article information. The terminal receives a first operation on the first recommendation. The terminal sends a first request to the server in response to the first operation, where the first request includes an identifier of the first message, the first request is used to request the server to obtain content of a target article and second data based on the identifier of the first message, and the second data is related to the first data. The terminal obtains the content of the target article and the second data from the server. The terminal displays a second interface, where the content of the target article and recommendation information corresponding to the second data are displayed on the second interface.

The server may be another server. For example, the another server may correspond to a local application or a third-party application. The server may interact with the terminal by using a push server. Specifically, the user behavior information carries a user identifier. The terminal may store a push application, and the push application corresponds to the push server. When the push application is run on the terminal, correspondingly, the push server may obtain a user identifier of the push application. The push server may be used as forwarding middleware between the another server and the terminal based on the user identifier of the push application, to implement interaction between the another server and the terminal.

The target article information may include at least one of a title, an abstract, and an author.

In this way, the server pushes the first message to the terminal for the user behavior information of the user. This implements a personalized push. In addition, when displaying the target article, the terminal may display a reason for recommending the target article, so that the recommended article is interpretable. This improves reliability of a recommendation message and improves user experience.

In some implementations, the terminal obtains a display template corresponding to the first data based on the first data, or obtains a display template corresponding to the second data based on the second data. The terminal displays the second interface, where the content of the target article and the recommendation information corresponding to the second data displayed by using the display template are displayed on the second interface. The terminal displays the second data sent by the server in a personalized manner by using the display template. This improves user experience.

In a specific implementation, that the terminal obtains a display template corresponding to the first data based on the first data, or obtains a display template corresponding to the second data based on the second data is specifically: The terminal obtains, based on the recommendation reason field, a display template corresponding to the recommendation reason field.

In some possible implementations, before the second interface is displayed, the method further includes: The terminal receives related data that is of a category to which the target article belongs and that is pushed by the server. Second content is further displayed on the second interface, and the second content is obtained based on the related data of the category to which the target article belongs. In this way, data sent by the server to the terminal may further be related data of the category to which the target article belongs, and pushing is performed based on a relevance degree with the target article. This implements a personalized push and improves user experience.

In a specific implementation, the user behavior information includes any one of the following: geographical location information, subscription dynamic category information, social dynamic category information, and user interest category information.

In a specific implementation, the user behavior information includes the user interest category information. The user interest category information includes an interest vector weight of each article category, and the interest vector weight of each article category indicates a preference degree of the user for each category of articles; and before that the terminal sends user behavior information of a user, the method further includes: The terminal obtains n historical articles browsed by the user, where n is a positive integer greater than 1. The terminal extracts article categories of the n historical articles browsed by the user. The terminal determines an interest vector weight of each article category based on the article categories of the n historical articles and a tap frequency, a time attenuation factor, and a weight of each article category.

In a specific implementation, the user behavior information includes the user interest category information, the target article is determined by the server based on the interest category information, and the first data is related to the interest category information. Alternatively, the first data is related to the target article information and the interest category information.

In a specific implementation, the second data displayed on the second interface specifically includes: the second data includes at least one of the following: a ranking list of user interests and a historical behavior corresponding to the user interests.

In a specific implementation, the user behavior information includes the geographical location information. The target article is determined by the server based on geographical location information of the user, and the first data is related to the geographical location information. Alternatively, the first data is related to the target article information and the geographical location information.

In a specific implementation, the second data displayed on the second interface specifically includes: the second data includes at least one of the following: a regional hot spot event ranking list, a historical development trace of a regional hot spot event, and a popularity value change of a regional hot spot event within preset time.

In a specific implementation, the user behavior information includes the subscription dynamic category information, and the subscription dynamic category information includes subscription data of the user. The target article is determined by the server based on the subscription data of the user, and the first data is related to the subscription dynamic category information. Alternatively, the first data is related to the target article information and the subscription dynamic category information.

In a specific implementation, the second data displayed on the second interface specifically includes: the second data includes at least one of the following: statistical information of user subscriptions, comment content of a user article, and a subscription dynamic followed by the user.

In a specific implementation, the user behavior information includes the social dynamic category information, and the social dynamic category information includes friend information of the user. The target article is determined by the server based on the friend information of the user, and the first data is related to the social dynamic category information. Alternatively, the first data is related to the target article information and the social dynamic category information.

In a specific implementation, the second data displayed on the second interface specifically includes: the second data includes at least one of the following: statistical information of friends of the user, a dynamic shared and commented by a friend of the user, and a dynamic in a friend circle of the user.

According to a second aspect, an embodiment of this application provides a message push method, applied to a communication system, where the communication system includes a terminal and a server, and the method may include: The terminal sends user behavior information of a user to the server. The server determines, based on the user behavior information, target article information and first data corresponding to the target article information, where the first data includes a recommendation reason field, and the first data is related to the target article information and the user behavior information. The server generates a first message based on the target article information and the first data. The terminal receives the first message sent by the server, where the first message includes the target article information and the first data. The terminal displays a first interface, where the first interface includes a first recommendation, the first recommendation includes first content and recommendation information corresponding to the first data, and the first content is obtained based on the target article information. The terminal receives a first operation on the first recommendation. The terminal sends a first request to the server in response to the first operation, where the first request includes an identifier of the first message, the first request is used to request the server to obtain content of a target article and second data based on the identifier of the first message, and the second data is related to the first data. The server obtains the content of the target article and the second data based on the first request. The server sends the target article and second data to the terminal. The terminal obtains the content of the target article and the second data from the server. The terminal obtains a display template corresponding to the second data based on the second data. The terminal displays a second interface, where the content of the target article and recommendation information corresponding to the second data are displayed on the second interface.

The server may be another server. For example, the another server may correspond to a local application or a third-party application. The server may interact with the terminal by using a push server. Specifically, the user behavior information carries a user identifier. The terminal may store a push application, and the push application corresponds to the push server. When the push application is run on the terminal, correspondingly, the push server may obtain a user identifier of the push application. The push server may be used as forwarding middleware between the another server and the terminal based on the user identifier of the push application, to implement interaction between the another server and the terminal.

In this way, the server may retrieve an article based on the user behavior information of the user on the terminal, find the target article from the retrieved article, and associate the target article with an interpretability template to determine the recommendation reason field, to form the first message. In this way, the server may generate the first message based on the user behavior information, to implement personalized push. In this way, the first message received by the terminal is determined based on the user behavior information of the user on the terminal. When displaying the target article, the terminal may display a reason for recommending the target article. In this way, the recommended article is interpretable. This improves reliability of the recommendation message, and improves user experience.

In some implementations, the terminal obtains a display template corresponding to the first data based on the first data, or obtains a display template corresponding to the second data based on the second data. The terminal displays the second interface, where the content of the target article and the recommendation information corresponding to the second data displayed by using the display template are displayed on the second interface. The terminal displays the second data sent by the server in a personalized manner by using the display template. This improves user experience.

In a specific implementation, that the terminal obtains a display template corresponding to the first data based on the first data, or obtaining a display template corresponding to the second data based on the second data is specifically: The terminal obtains, based on the recommendation reason field, a display template corresponding to the recommendation reason field.

In some possible implementations, before the terminal displays the second interface, the method further includes: The terminal receives related data that is of a category to which the target article belongs and that is pushed by the server. Second content is further displayed on the second interface, and the second content is obtained based on the related data of the category to which the target article belongs. In this way, data sent by the server to the terminal may further be related data of the category to which the target article belongs, and pushing is performed based on a relevance degree with the target article. This implements a personalized push and improves user experience.

In a specific implementation, the user behavior information includes any one of the following: geographical location information, subscription dynamic category information, social dynamic category information, and user interest category information.

In a specific implementation, the user behavior information includes the user interest category information. The user interest category information includes an interest vector weight of each article category, and the interest vector weight of each article category indicates a preference degree of the user for each category of articles; and before sending the user behavior information of the user, the method further includes: obtaining n historical articles browsed by the user, where n is a positive integer greater than 1; extracting article categories of the n historical articles browsed by the user; and determining an interest vector weight of each article category based on the article categories of the n historical articles and a tap frequency, a time attenuation factor, and a weight of each article category.

In a specific implementation, the user behavior information includes the user interest category information. The target article is determined by the server based on the interest category information, and the first data is related to the interest category information. Alternatively, the first data is related to the target article information and the interest category information.

In a specific implementation, the second data displayed on the second interface specifically includes: the second data includes at least one of the following: a ranking list of user interests and a historical behavior corresponding to the user interests.

In a specific implementation, the user behavior information includes the geographical location information. The target article is determined by the server based on geographical location information of the user, and the first data is related to the geographical location information. Alternatively, the first data is related to the target article information and the geographical location information.

In a specific implementation, the second data displayed on the second interface specifically includes: the second data includes at least one of the following: a regional hot spot event ranking list, a historical development trace of a regional hot spot event, and a popularity value change of a regional hot spot event within preset time.

In a specific implementation, the user behavior information includes the subscription dynamic category information, and the subscription dynamic category information includes subscription data of the user. The target article is determined by the server based on the subscription data of the user, and the first data is related to the subscription dynamic category information. Alternatively, the first data is related to the target article information and the subscription dynamic category information.

In a specific implementation, the second data displayed on the second interface specifically includes: the second data includes at least one of the following: statistical information of user subscriptions, comment content of a user article, and a subscription dynamic followed by the user.

In a specific implementation, the user behavior information includes the social dynamic category information, and the social dynamic category information includes friend information of the user. The target article is determined by the server based on the friend information of the user, and the first data is related to the social dynamic category information. Alternatively, the first data is related to the target article information and the social dynamic category information.

In a specific implementation, the second data displayed on the second interface specifically includes: the second data includes at least one of the following: statistical information of friends of the user, a dynamic shared and commented by a friend of the user, and a dynamic in a friend circle of the user.

In a specific implementation, the user behavior information further includes time at which the user uses the application, and that the server determines, based on the user behavior information, target article information is specifically: The server collects, based on time at which each user uses the application, statistics about a first time area in which a user of the application uses the application. The server performs scheduling on each user based on the time at which each user uses the application and the first time area. The server loads users based on the scheduling. The server determines the target article based on each category of information of each user in all users.

In a specific implementation, that the server determines the target article based on each category of information of each user in all users is specifically: The server determines a score of each article of the user based on a weight of each category of information of the user and a matching relationship between each category of information of the user and a category to which the article belongs. The server determines the target article based on the score of each article.

According to a third aspect, an embodiment of this application provides a terminal. The terminal may include a sending unit, configured to send user behavior information of a user; and a receiving unit, configured to receive a first message sent by a server, where the first message includes target article information and first data, and the first data includes a recommendation reason field; and the target article information is determined by the server based on the user behavior information, and the first data is related to the target article information and the user behavior information; and a display unit, configured to display a first interface, where the first interface includes a first recommendation, the first recommendation includes first content and recommendation information corresponding to the first data, and the first content is obtained based on the target article information. The receiving unit is further configured to receive a first operation on the first recommendation. The sending unit is further configured to send a first request to the server in response to the first operation, where the first request includes an identifier of the first message, the first request is used to request the server to obtain content of a target article and second data based on the identifier of the first message, and the second data is related to the first data. The obtaining unit is configured to obtain the content of the target article and the second data from the server. The display unit is further configured to display a second interface, where the content of the target article and recommendation information corresponding to the second data are displayed on the second interface.

The server may be another server. For example, the another server may correspond to a local application or a third-party application. The server may interact with the terminal by using a push server. Specifically, the user behavior information carries a user identifier. The terminal may store a push application, and the push application corresponds to the push server. When the push application is run on the terminal, correspondingly, the push server may obtain a user identifier of the push application. The push server may be used as forwarding middleware between the another server and the terminal based on the user identifier of the push application, to implement interaction between the another server and the terminal.

In this way, the server pushes the first message to the terminal for the user behavior information of the user. This implements a personalized push. In addition, when displaying the target article, the terminal may display a reason for recommending the target article, so that the recommended article is interpretable. This improves reliability of a recommendation message and improves user experience.

In some implementations, the obtaining unit is further configured to obtain a display template corresponding to the first data based on the first data, or obtain a display template corresponding to the second data based on the second data. The display unit is further configured to display the second interface, where the content of the target article and the recommendation information corresponding to the second data displayed by using the display template are displayed on the second interface. The terminal displays the second data sent by the server in a personalized manner by using the display template. This improves user experience.

In a specific implementation, the obtaining unit is further configured to obtain, based on the recommendation reason field, a display template corresponding to the recommendation reason field.

In some possible implementations, the receiving unit is further configured to receive related data that is of a category to which the target article belongs and that is pushed by the server. Second content is further displayed on the second interface, and the second content is obtained based on the related data of the category to which the target article belongs.

In a specific implementation, the user behavior information includes any one of the following: geographical location information, subscription dynamic category information, social dynamic category information, and user interest category information.

In a specific implementation, the user behavior information includes the user interest category information, the user interest category information includes an interest vector weight of each article category, and the interest vector weight of each article category indicates a preference degree of the user for each category of articles. The terminal further includes: an obtaining unit, configured to obtain n historical articles browsed by the user, where n is a positive integer greater than 1; an extraction unit, configured to extract article categories of the n historical articles browsed by the user; and a determining unit, configured to determine an interest vector weight of each article category based on the article categories of the n historical articles and a tap frequency, a time attenuation factor, and a weight of each article category.

In a specific implementation, the user behavior information includes the user interest category information. The target article is determined by the server based on the interest category information, and the first data is related to the interest category information. Alternatively, the first data is related to the target article information and the interest category information.

In a specific implementation, the second data displayed on the second interface specifically includes: the second data includes at least one of the following: a ranking list of user interests and a historical behavior corresponding to the user interests.

In a specific implementation, the user behavior information includes the geographical location information. The target article is determined by the server based on geographical location information of the user, and the first data is related to the geographical location information. Alternatively, the first data is related to the target article information and the geographical location information.

In a specific implementation, the second data displayed on the second interface specifically includes: the second data includes at least one of the following: a regional hot spot event ranking list, a historical development trace of a regional hot spot event, and a popularity value change of a regional hot spot event within preset time.

In a specific implementation, the user behavior information includes the subscription dynamic category information, and the subscription dynamic category information includes subscription data of the user. The target article is determined by the server based on the subscription data of the user, and the first data is related to the subscription dynamic category information. Alternatively, the first data is related to the target article information and the subscription dynamic category information.

In a specific implementation, the second data displayed on the second interface specifically includes: the second data includes at least one of the following: statistical information of user subscriptions, comment content of a user article, and a subscription dynamic followed by the user.

In a specific implementation, the user behavior information includes the social dynamic category information, and the social dynamic category information includes friend information of the user. The target article is determined by the server based on the friend information of the user, and the first data is related to the social dynamic category information. Alternatively, the first data is related to the target article information and the social dynamic category information.

In a specific implementation, the second data displayed on the second interface specifically includes: the second data includes at least one of the following: statistical information of friends of the user, a dynamic shared and commented by a friend of the user, and a dynamic in a friend circle of the user.

According to a fourth aspect, an embodiment of this application provides a terminal, where the terminal includes one or more processors and a memory, the memory stores code, and when the code is executed by the processor, the terminal is enabled to perform the method according to the first aspect.

According to a fifth aspect, an embodiment of this application provides a communication system, where the communication system includes one or more terminals and a server, and when computer instructions are run on the terminal, the terminal is enabled to perform the method according to the first aspect.

According to a sixth aspect, an embodiment of this application provides a computer-readable storage medium, including computer instructions. When the computer instructions are run on a terminal, the terminal is enabled to perform the method according to the first aspect.

According to a seventh aspect, an embodiment of this application provides a computer-readable storage medium, including computer instructions. When the computer instructions are run on a terminal, the terminal is enabled to perform the method according to the first aspect.

For specific implementations and corresponding technical effects of embodiments in the second aspect to the seventh aspect, refer to specific implementations and technical effects of the first aspect.

**BRIEF DESCRIPTION OF DRAWINGS**

FIG. 1A is a schematic diagram of an interface of a terminal according to an embodiment of this application;

FIG. 1B is a schematic diagram of another interface of a terminal according to an embodiment of this application;

FIG. 1C is a schematic diagram of still another interface of a terminal according to an embodiment of this application;

FIG. 1D is a schematic diagram of still another interface of a terminal according to an embodiment of this application;

FIG. 1E is a schematic diagram of still another interface of a terminal according to an embodiment of this application;

FIG. 1F is a schematic diagram of still another interface of a terminal according to an embodiment of this application;

FIG. 1G is a schematic diagram of still another interface of a terminal according to an embodiment of this application;

FIG. 1H is a schematic diagram of still another interface of a terminal according to an embodiment of this application;

FIG. 1I is a schematic diagram of still another interface of a terminal according to an embodiment of this application;

FIG. 2A is a schematic diagram of a structure of a communication system according to an embodiment of this application;

FIG. 2B is a schematic diagram of a structure of a terminal according to an embodiment of this application;

FIG. 3A is a schematic flowchart of a message push method according to an embodiment of this application;

FIG. 3B is a schematic flowchart 1 of a message push method in a user interest application scenario according to an embodiment of this application;

FIG. 3C is a schematic flowchart 2 of a message push method in a user interest application scenario according to an embodiment of this application;

FIG. 3D is a schematic flowchart 3 of a message push method in a user interest application scenario according to an embodiment of this application;

FIG. 4A is a schematic diagram 1 of a software architecture of a communication system according to an embodiment of this application;

FIG. 4B is a schematic diagram 2 of a software architecture of a communication system according to an embodiment of this application;

FIG. 4C is a schematic diagram 3 of a software architecture of a communication system according to an embodiment of this application; and

FIG. 4D-1 and FIG. 4D-2 are a schematic diagram 4 of a software architecture of a communication system according to an embodiment of this application.

**DESCRIPTION OF EMBODIMENTS**

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments, unless otherwise specified, "a plurality of" means two or more.

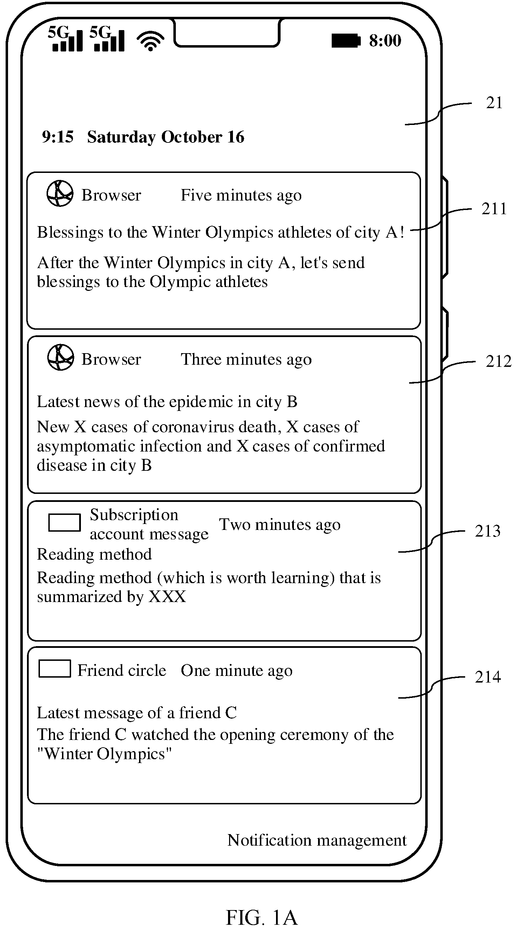

In a case, to enable a pushed message to be interpretable, regional keywords such as "[xx place]" and "[Guess you like]" are usually manually added to a title or an abstract of a to-be-pushed article to identify a delivery intention. For example, it is assumed that keywords such as "[City A]", "[Winter Olympics]", "[City B]", and "[Epidemic]" are added through manual labeling, to mark a delivery intention. Then, a server determines, based on the keywords, that the following articles need to be pushed to a terminal: A first article is "Blessings to the Winter Olympics athletes of city A!". A second article is "Latest news of the epidemic in city B". The server separately generates a first message and a second message for the foregoing articles. The first message and the second message each may carry the following information: an article name, an article abstract, and the like. After the terminal receives the messages, the terminal displays an interface 21 shown in FIG. 1A, and content of the first message and the second message is displayed on the interface 21. Specifically, a control 211 and a control 212 are displayed on the interface 21. The content of the first message is presented on the control 211, for example, a name "Blessings to the Winter Olympics athletes of city A!" and an abstract "After the Winter Olympics in city A, let's send blessings to the Olympic athletes". The content of the second message is presented on the control 212, for example, a name "Latest news of the epidemic in city B" and an abstract "New X cases of XX disease death, X cases of asymptomatic infection and X cases of confirmed disease in city B". It can be learned that currently, a delivery intention of a message can be labeled only based on a keyword, and a push message cannot be pushed based on an interest of a user. This cannot implement a personalized push.

To resolve the foregoing technical problem, embodiments of this application provide a message push method. The method is applied to a terminal. The method includes: The terminal reports user behavior information to a server, where the user behavior information includes a user identifier. The server determines a target article and first data based on the user behavior information, where the first data includes a recommendation reason field. The server generates a push message (for example, a first message) based on the target article information and the first data, and sends the push message to the terminal based on the user identifier. The terminal receives the push message pushed by the server, where the push message includes the target article information and the first data. The terminal displays a first interface, where first content corresponding to the target article information and recommendation information corresponding to the first data are displayed on the first interface. The terminal receives a first operation on the first interface. The terminal sends a request to the server in response to the first operation, where the request carries an identifier of the push message. The server obtains content of the target article and second data related to the first data based on the identifier of the push message, and sends the content of the target article and the second data to the terminal. The terminal receives the content of the target article and the second data. The terminal obtains a display template corresponding to the second data based on the second data. The terminal displays a second interface, where the content of the target article and the second data that is displayed by using the display template are displayed on the second interface. In this way, the server pushes the push message to the terminal based on the user behavior information of the user. This implements a personalized push. In addition, when displaying the target article, the terminal may display a reason for recommending the target article, so that the recommended article is interpretable. This improves reliability of a recommendation message and improves user experience.

With reference to different scenarios, the following describes in detail the message push method provided in embodiments of this application.

Scenario 1: user interest

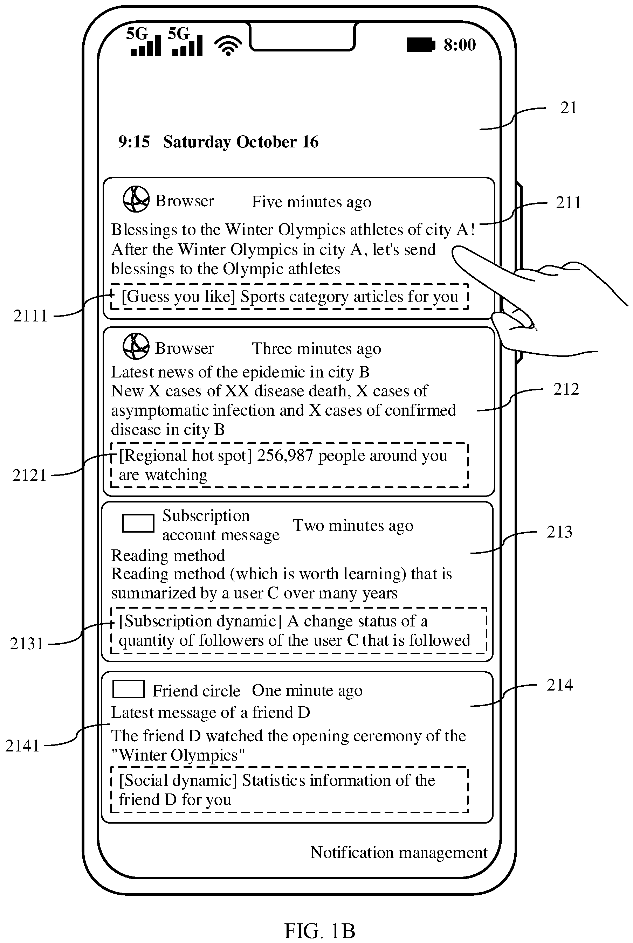

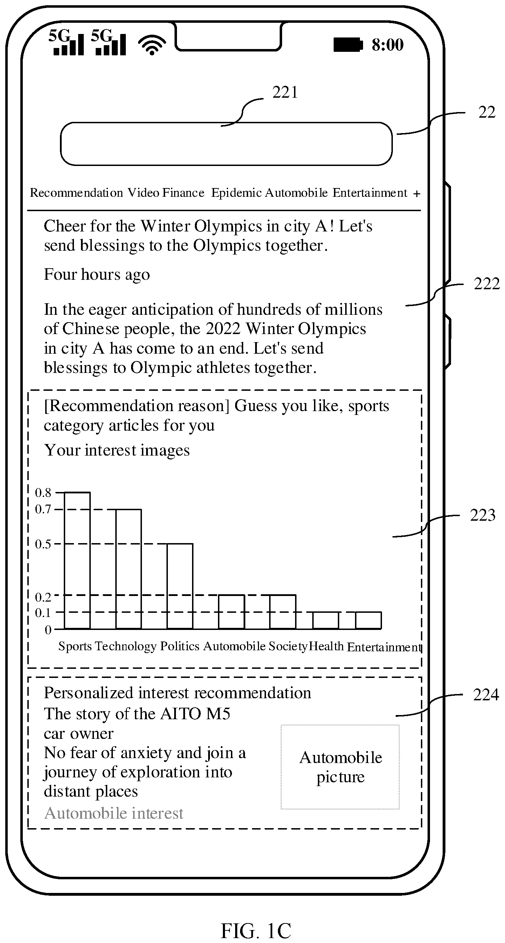

Example 1: The foregoing example is still used. The server determines the first article based on the user behavior information of the user (for example, a quantity of times that the user browses sports category articles), where the first article is "Blessings to the Winter Olympics athletes of city A!". The server may generate a third message for the article. The third message carries the target article information such as the article name and the article abstract, and further carries the first data. The first data includes the recommendation reason field (for example, "[Guess you like]") and attribute data (for example, a sports category article). After the terminal receives the message, the terminal displays an interface 21 shown in FIG. 1B, and displays content of the third message on the interface 21. Specifically, a control 211 is displayed on the interface 21. The content of the third message is presented on the control 211, for example, the name "Blessings to the Winter Olympics athletes of city A!", the abstract "After the Winter Olympics in city A, let's send blessings to the Olympic athletes", and a first interpretable copywriting "[Guess you like] Sports category articles for you". When the user taps the control 211 shown in FIG. 1B, the terminal receives the operation of the user, and the terminal sends a request to the server in response to the operation, where the request carries an identifier of the third message. The server obtains the content of the first article and the second data based on the identifier of the third message, where the second data is related to the first data. For example, the second data is statistical data corresponding to the first interpretable copywriting. The server sends the content of the first article and the second data to the terminal. The terminal receives the content of the first article and the second data. The terminal obtains, based on the second data, an interpretability template (for example, the display template) corresponding to the second data. In this case, the terminal displays an interface 22 shown in FIG. 1C, and displays content of a fourth message on the interface 22. Specifically, an area 222 and an area 223 are displayed on the interface 22. The content of the first article is presented in the area 222, for example, "Blessings to the Winter Olympics athletes of city A! Let's send blessings to the Olympic athletes together", and "In the eager anticipation of hundreds of millions of Chinese people, the 2022 Winter Olympics in city A has come to an end. Let's send blessings to Olympic athletes together." A second interpretable copywriting, for example, "Your interest images", is presented in the area 223.

Scenario 2: regional hot spot

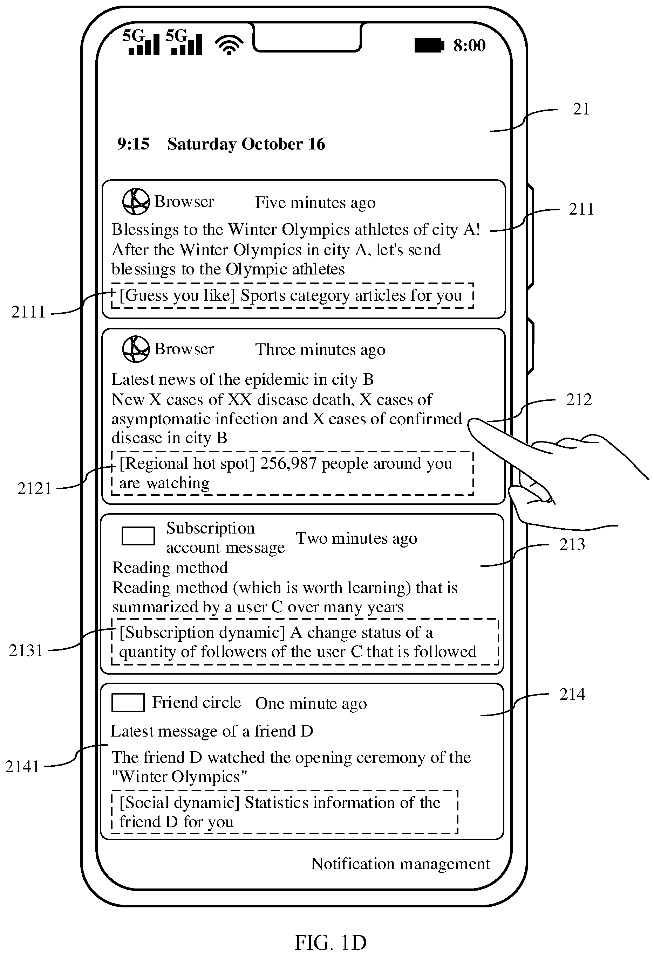

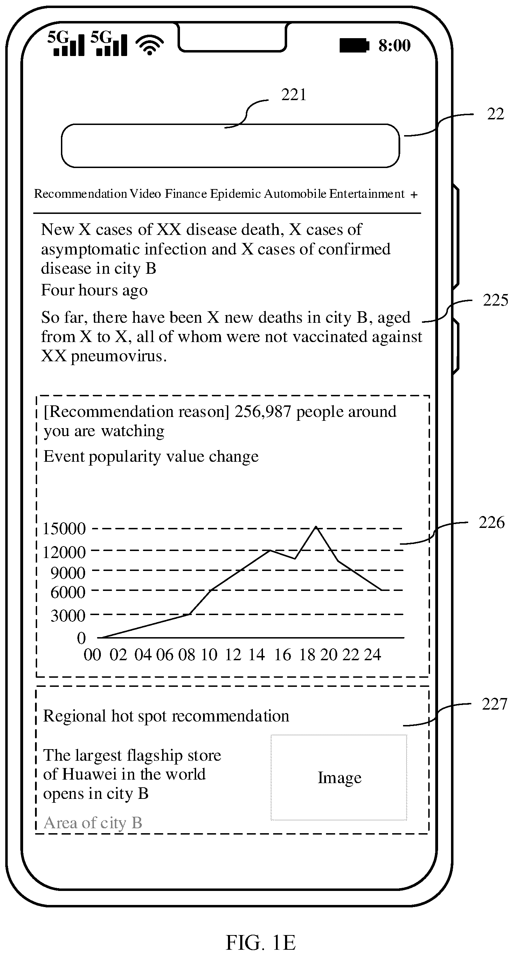

Example 2: The foregoing example is still used. The server determines the second article based on the user behavior information of the user (for example, a region in which the user is located), where the second article is "Latest news of the epidemic in city B". The server may generate a fifth message for the article. The fifth message carries the target article information such as the article name and the article abstract, and further carries the first data. The first data includes the recommendation reason field (for example, "[Regional hot spot]") and statistical data (for example, 256,987 people around you are watching). After the terminal receives the message, the terminal displays an interface 21 shown in FIG. 1D, and displays content of the fifth message on the interface 21. Specifically, a control 212 is displayed on the interface 21. The content of the fifth message is presented on the control 212, for example, the name "Latest news of the epidemic in city B", the abstract "New X cases of XX disease death, X cases of asymptomatic infection and X cases of confirmed disease in city B", and a first interpretable copywriting "[Regional hot spot] 256,987 people around you are watching". When the user taps the control 212 shown in FIG. 1D, the terminal receives the operation of the user, and the terminal sends a request to the server in response to the operation, where the request carries an identifier of the fifth message. The server obtains the content of the second article and the second data based on the identifier of the fifth message, where the second data is related to the first data. For example, the second data may be statistical data corresponding to the first interpretable copywriting. The server sends the content of the second article and the second data to the terminal. The terminal receives the content of the second article and the second data. The terminal obtains, based on the second data, an interpretability template (for example, the display template) corresponding to the second data. In this case, the terminal displays an interface 22 shown in FIG. 1E, and displays content of a sixth message on the interface 22. Specifically, an area 225 and an area 226 are displayed on the interface 22. The content of the second article is presented in the area 225, for example, "New X cases of XX disease death, X cases of asymptomatic infection and X cases of confirmed disease in city B", and "So far, there have been X new deaths in city B, aged from X to X, all of whom were not vaccinated against XX pneumovirus." A second interpretable copywriting, for example, "Event popularity value change", is presented in the area 226.

Scenario 3: subscription dynamic

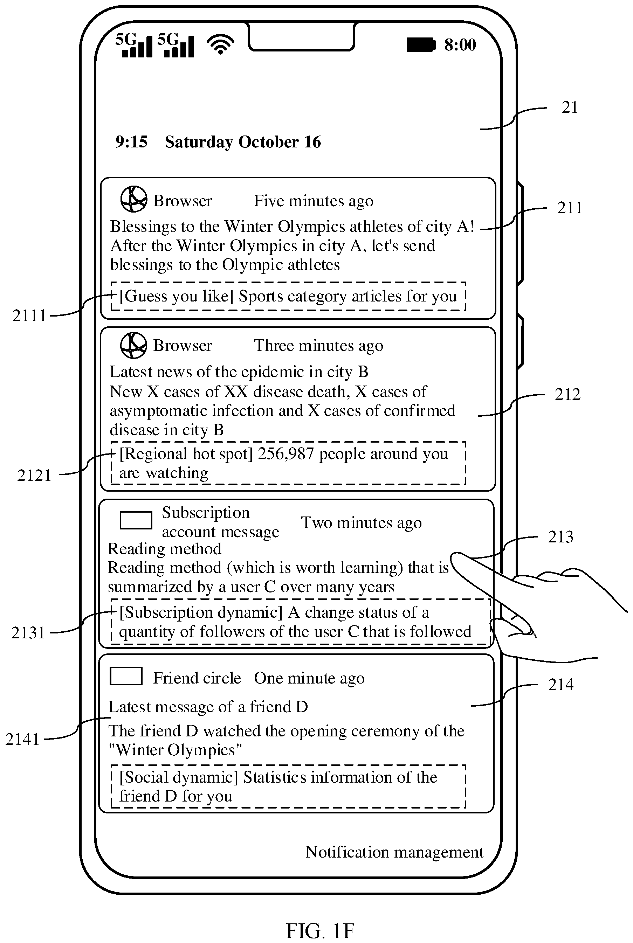

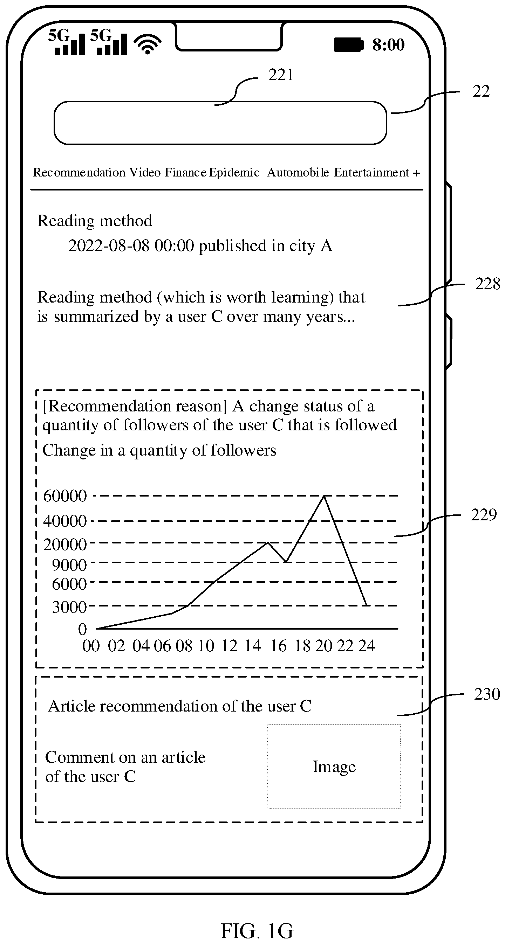

Example 3: The server determines a third article based on the user behavior information (for example, a user subscription record) of the user, where the third article is "Reading method". The server may generate a seventh message for the article. The seventh message carries the target article information such as the article name and the article abstract, and further carries the first data. The first data includes the recommendation reason field (for example, "[Subscription dynamic]") and statistical data (for example, a change status of a quantity of followers of a user C that is followed). After the terminal receives the message, the terminal displays an interface 21 shown in FIG. 1F, and displays content of the seventh message on the interface 21. Specifically, a control 213 is displayed on the interface 21. The content of the seventh message is presented on the control 213, for example, a name "Reading method", an abstract "Reading method (which is worth learning) summarized by the user C over many years", and a first interpretable copywriting "[Subscription dynamic] A change status of a quantity of followers of a user C that is followed". When the user taps the control 213 shown in FIG. 1F, the terminal receives the operation of the user, and the terminal sends a request to the server in response to the operation, where the request carries an identifier of the seventh message. The server obtains content of the third article and the second data based on the identifier of the seventh message, where the second data is related to the first data. For example, the second data is statistical data corresponding to the first interpretable copywriting. The server sends the content of the third article and the second data to the terminal. The terminal receives the content of the third article and the second data. The terminal obtains, based on the second data, an interpretability template (for example, the display template) corresponding to the second data. In this case, the terminal displays an interface 22 shown in FIG. 1G, and displays content of an eighth message on the interface 22. Specifically, an area 228 and an area 229 are displayed on the interface 22. The content of the third article is presented in the area 228, for example, "Reading method" and "Reading method (which is worth learning) that is summarized by a user C over many years and that is a six-step reading method...". A second interpretable copywriting, for example, "Change in a quantity of fans", is presented in the area 229.

Scenario 4: friend circle

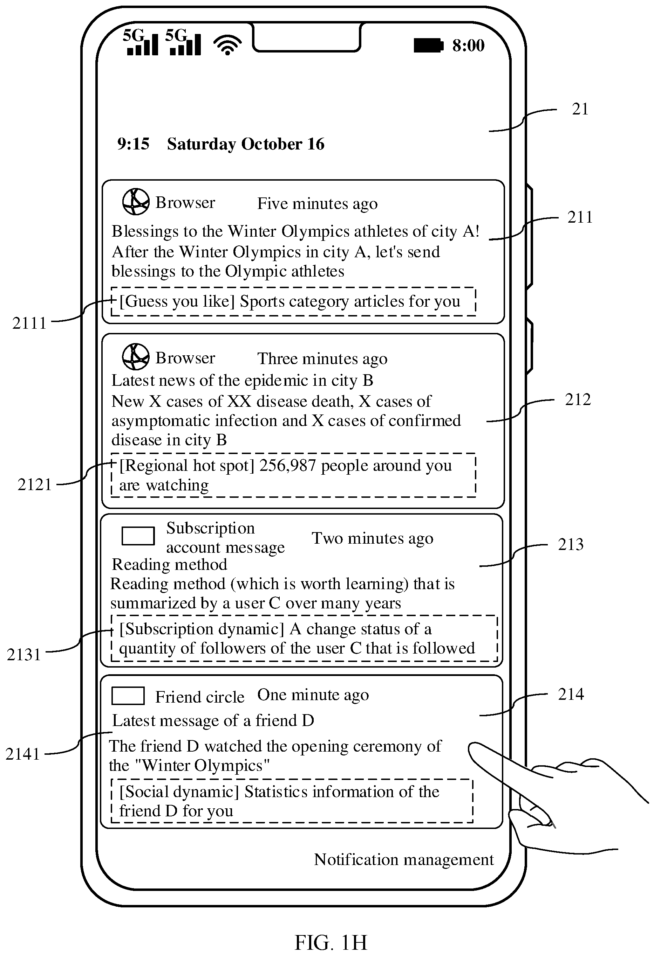

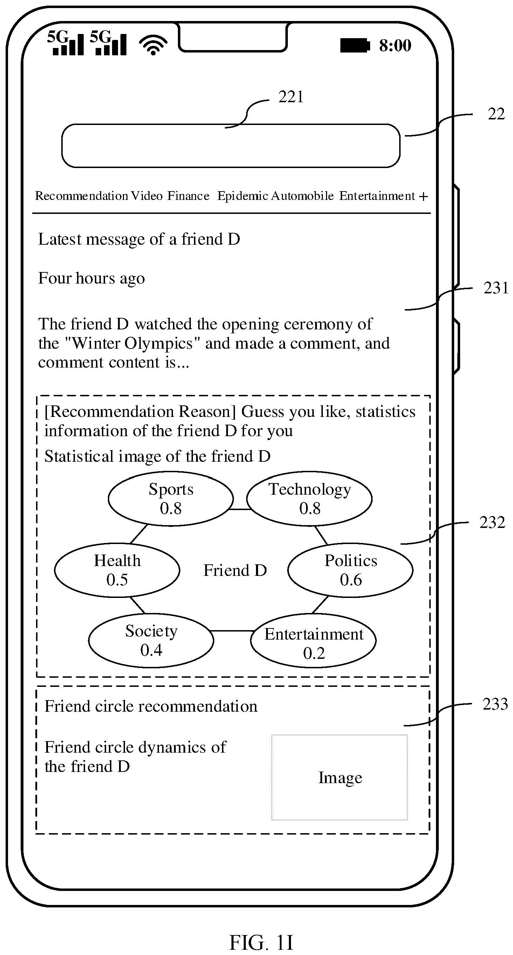

Example 4: The server determines a fourth article based on the user behavior information of the user (for example, the user browses the friend circle), where the fourth article is "Latest message of a friend D". In addition, in some embodiments, the server may further confirm whether a friend of the user enables a permission to view social dynamics. If the friend of the user enables the permission to view social dynamics, the server can push a latest message of the friend to the terminal. For example, it is assumed that the user has the friend D and a friend E, the friend D enables a permission to view social dynamics, and the friend E does not enable a permission to view social dynamics, the server can push only a latest message of the friend D to the terminal. The server may generate a ninth message for the article. The ninth message carries the target article information such as the article name and the article abstract, and further carries the first data. The first data includes the recommendation reason field (for example, "[Social dynamic]") and statistical data (for example, statistical information of the friend D). After the terminal receives the message, the terminal displays an interface 21 shown in FIG. 1H. Specifically, a control 214 is displayed on the interface 21. The content of the ninth message is presented on the control 214, for example, a name "Latest message of a friend D", an abstract "The friend D watches the opening ceremony of the Winter Olympics", and a first interpretable copywriting "[Social dynamic] Statistics information of the friend D". When the user taps the control 214 shown in FIG. 1H, the terminal receives an operation of the user., and the terminal sends a request to the server in response to the operation, where the request carries an identifier of the ninth message. The server obtains content of the fourth article and the second data based on the identifier of the ninth message, where the second data is related to the first data. For example, the second data is statistical data corresponding to the first interpretable copywriting. The server sends the content of the fourth article and the second data to the terminal. The terminal receives the content of the fourth article and the second data. The terminal obtains, based on the second data, an interpretability template (for example, the display template) corresponding to the second data. In this case, the terminal displays an interface 22 shown in FIG. 1I, and displays content of a tenth message on the interface 22. Specifically, an area 231 and an area 232 are displayed on the interface 22. The content of the fourth article is presented in the area 231, for example, "Latest message of a friend D", and "The friend D watches 'the opening ceremony of the Winter Olympics' and makes a comment, and comment content is...". A second interpretable copywriting, for example, "Statistical image of the friend D", is presented in the area 232.

In conclusion, the server may retrieve an article based on the user behavior information of the user on the terminal, find the target article from the retrieved article, and associate the target article with an interpretability template to determine the recommendation reason field, the statistical data, and/or the attribute data, to form the push message. In this way, the server may generate the push message based on the user behavior information, to implement a personalized push. In this way, the push message received by the terminal is determined based on the user behavior information of the user on the terminal. When displaying the target article, the terminal may display a reason for recommending the target article. In this way, the recommended article is interpretable. This improves reliability of the recommendation message, and improves user experience.

In some embodiments, related data of the target article is further displayed on the second interface. For example, if a category to which the target article belongs is a national hot spot category and a regional hot spot category, the related data may be a hot event ranking list. If a category to which the target article belongs is a daily interest category and an hourly interest category, the related data may be a user interest ranking list. If a category to which the target article belongs is a social dynamic category, the related data may be a dynamic in a friend circle. If a category to which the target article belongs is a subscription dynamic category, the related data may be dynamic information of all subscriptions (source). In some other embodiments, other related data of the category to which the target article belongs is further displayed on the second interface. For example, an area 224 is displayed on the interface 22 shown in FIG. 1C, and an article of a personalized interest recommendation, for example, "The story of the AITO M5 car owner No fear of anxiety and join a journey of exploration into distant places", is displayed in the area 224. An area 227 is displayed on the interface 22 shown in FIG. 1E, and an article of a regional hot spot recommendation, for example, "The largest flagship store of Huawei in the world opens in city B", is displayed in the area 227. An area 230 is displayed on the interface 22 shown in FIG. 1G, and an article recommendation of the user C, for example, "Comment on an article of the user C", is displayed in the area 230. An area 233 is displayed on the interface 22 shown in FIG. 1I, and a friend circle recommendation, for example, "Friend circle dynamic of the friend D", is displayed in the area 233.

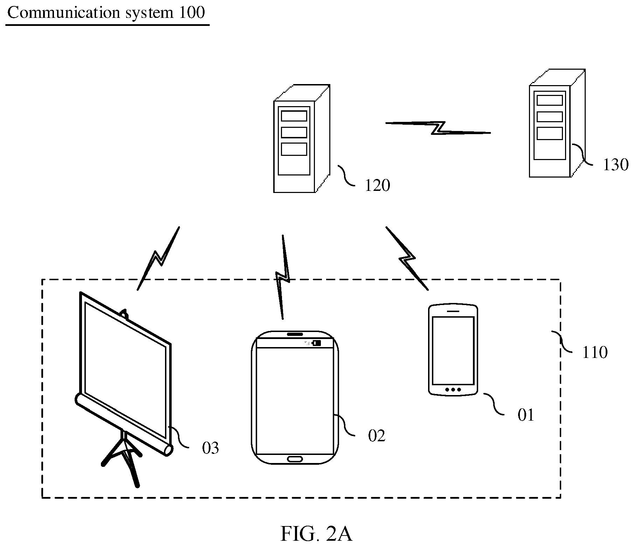

The message push method provided in embodiments of this application may be applied to a communication system including at least one terminal and one server. FIG. 2A is a schematic diagram of an architecture of the communication system. As shown in FIG. 2A, the system 100 may further include a plurality of terminals 110 (for example, a first terminal 01, a second terminal 02, and a third terminal 03) and a plurality of servers (for example, a push server 120 and an application server 130). For example, the first terminal 01 may be a mobile phone, the second terminal 02 may be a tablet computer, and the third terminal 03 may be a large-screen display. The push server 120 may be a server corresponding to a push application, and the application server 130 may be another server, for example, a server corresponding to a local application or a server corresponding to a third-party application. The application server 130 may interact with the terminal 110 by using the push server 120. Specifically, the terminal 110 may store a push application, and the push application corresponds to the push server 120. When the push application is run on the terminal 110, correspondingly, the push server 120 may obtain a user identifier of the push application. The terminal 110 may communicate with the push server 120 based on the user identifier, and the push server 120 may invoke an interface of the application server 130, to implement interaction between the push server 120 and the application server 130. In this way, the push server 120 may be used as forwarding middleware between the application server 130 and the terminal 110, to implement interaction between the application server 130 and the terminal 110. Therefore, the application server 130 may push a first message to the first terminal 01, the application server 130 may push a second message to the second terminal 02, and the application server 130 may push a third message to the third terminal 03. Content carried in the first message, the second message, and the third message may be related messages described above. The server mentioned in this embodiment of this application is the application server 130.

The terminal may be a device with a display function, such as a mobile phone, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), a wearable terminal, a television, or a virtual reality device. A specific form of the terminal is not specifically limited in embodiments of this application.

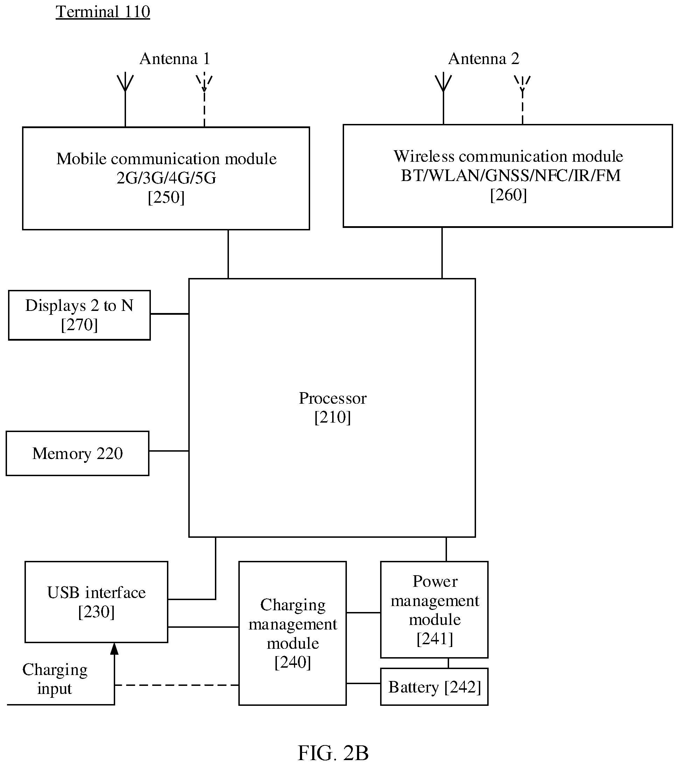

The following describes a hardware structure of the terminal 110. FIG. 2B is a schematic diagram of a structure of the terminal 110. As shown in FIG. 2B, the terminal 110 may include a processor 210, a memory 220, a universal serial bus (universal serial bus, USB) interface 230, a charging management module 240, a power management module 241, a battery 242, an antenna 1, an antenna 2, a mobile communication module 250, a wireless communication module 260, a display 270, and the like.

It may be understood that the structure shown in this embodiment of this application does not constitute a specific limitation on the terminal 110. In some other embodiments of this application, the terminal 110 may include more or fewer components than those shown in the figure, combine some components, split some components, or have different component arrangements. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces a waiting time of the processor 210, and therefore improves system efficiency.

The USB interface 230 is an interface that conforms to a USB standard specification, and may be specifically a mini USB interface, a micro USB interface, a USB type-C interface, or the like. The USB interface 230 may be configured to connect a charger to charge the terminal 110, and may also be used to transfer data between the terminal 110 and a peripheral device, or may be configured to connect to a headset for playing audio through the headset. This interface may further be configured to connect to another terminal, for example, an augmented reality (augmented reality, AR) device.

It may be understood that an interface connection relationship between the modules in this embodiment of this application is only an example for description, and does not constitute a limitation on the structure of the terminal 110. In some other embodiments of this application, the terminal 110 may alternatively use an interface connection manner different from that in the foregoing embodiment, or a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive wireless charging input via a wireless charging coil of the terminal 110. When charging the battery 242, the charging management module 240 may further charge the terminal by using the power management module 241.

The power management module 241 is configured to connect to the battery 242, the charging management module 240, and the processor 210. The power management module 241 receives an input of the battery 242 and/or the charging management module 240, and supplies power to the processor 210, the memory 220, the display 270, the wireless communication module 260, and the like. The power management module 241 may be further configured to monitor parameters such as a battery capacity, a battery cycle count, and a battery health status (an electric leakage or impedance). In some other embodiments, the power management module 241 may alternatively be disposed in the processor 210. In some other embodiments, the power management module 241 and the charging management module 240 may alternatively be disposed in a same device.

A wireless communication function of the terminal 110 may be implemented by using the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the terminal 110 may be configured to cover one or more communication frequency bands. Different antennas may be further reused, to improve antenna utilization. For example, the antenna 1 may be multiplexed as a diversity antenna of a wireless local area network. In some other embodiments, the antenna may be used in combination with a tuning switch.

The mobile communication module 250 may provide a solution applied to the terminal 110 for wireless communication such as 2G/3G/4G/5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some function modules in the mobile communication module 250 may be disposed in the processor 210. In some embodiments, at least some function modules in the mobile communication module 250 may be disposed in a same component as at least some modules in the processor 210.

The wireless communication module 260 may provide a solution applied to the terminal 110 for wireless communication. The wireless communication module 260 may be one or more components integrating at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, in the terminal 110, the antenna 1 and the mobile communication module 250 are coupled, and the antenna 2 and the wireless communication module 260 are coupled, so that the terminal 110 can communicate with a network and another device by using a wireless communication technology.

In some embodiments, the mobile communication module 250 receives a push message sent by another device, where the push message carries a recommendation reason field.

The terminal 110 may implement a display function through the GPU, the display 270, the application processor, and the like. The GPU is a microprocessor for image processing, and is connected to the display 270 and the application processor. The GPU is configured to: perform mathematical and geometric computation, and render an image. The processor 210 may include one or more GPUs that execute program instructions to generate or change display information.

The display 270 is configured to display an image, a video, and the like. The display 270 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 110 may include one or N displays 270, where N is a positive integer greater than 1.

In some embodiments, an interface is displayed on the display 270, a details page of the push message is displayed on the interface, and interpretable content of the push message is presented on the details page.

The memory 220 may be configured to store computer-executable program code. The executable program code includes instructions. The memory 220 may include a program storage area and a data storage area. The program storage area may store an operating system, an application required by at least one function (for example, a voice playing function or an image playing function), and the like. The data storage area may store data (for example, audio data and a phone book) and the like created during use of the terminal 110. In addition, the memory 220 may include a high-speed random access memory, and may further include a non-volatile memory, for example, at least one magnetic disk storage device, a flash storage device, or a universal flash storage (universal flash storage, UFS). The processor 210 runs instructions stored in the memory 220 and/or instructions stored in the memory disposed in the processor, to perform various function applications and data processing of the terminal 110.

Certainly, the terminal may further include another functional unit. This is not limited in embodiments of this application.

In addition, actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

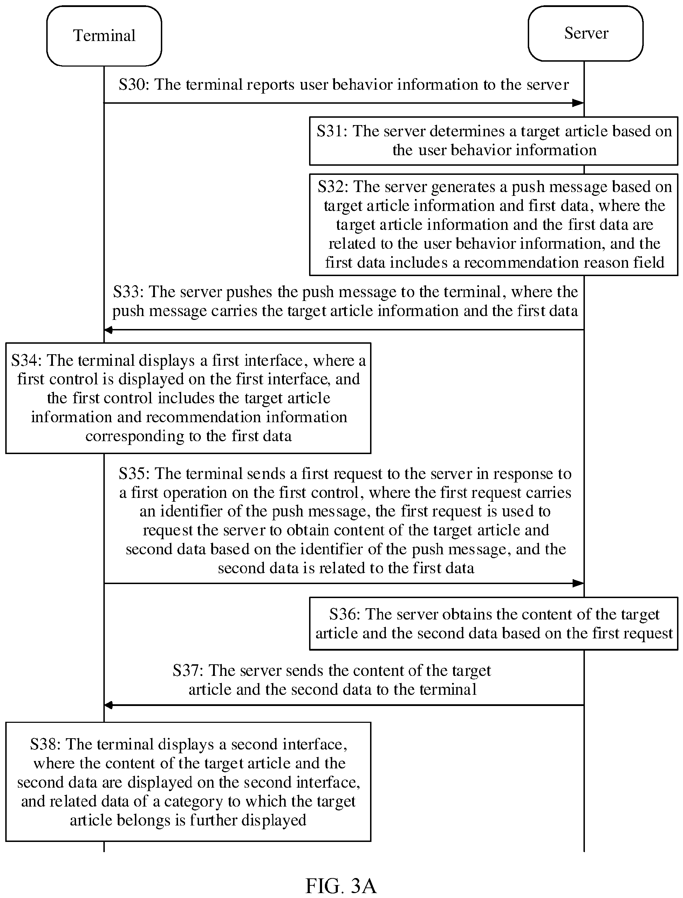

A message push method provided in an embodiment of this application is applied to the communication system shown in FIG. 2A. FIG. 3A is a schematic flowchart of a message push method according to an embodiment of this application. As shown in FIG. 3A, the method may include the following steps.

S30: A terminal reports user behavior information to a server. Correspondingly, the server receives the user behavior information reported by the terminal.

The user behavior information includes any one of the following: geographical location information, subscription dynamic category information, social dynamic category information, and user interest category information. For details of S30, refer to the following related descriptions. Details are not described herein again.

S31: The server determines a target article based on the user behavior information.

As described above, after the server receives the user behavior information reported by the terminal, the server may determine the target article based on the user behavior information. Regardless of which category of information the user behavior information is specifically, implementations in which the server determines the target article are similar. For details, refer to the following related descriptions. Details are not described herein again.

S32: The server generates a push message (for example, the first message) based on target article information and first data. The first data includes a recommendation reason field, the recommendation reason field is used to explain a reason for pushing the target article, and the first data is determined by the server based on the target article information.

As described above, after the server determines the target article, the server may generate the push message based on the target article. Regardless of which category of information the user behavior information is specifically, implementations in which the server generates the push message based on the target article are similar. For details, refer to the following related descriptions. Details are not described herein again.

S33: The server pushes the push message to the terminal. Correspondingly, the terminal receives the push message pushed by the server, where the push message carries the target article information and data of a first interpretable copywriting.

As described above, after the server generates the push message, the server pushes the push message to the terminal. The push message pushed by the server varies based on content of the user behavior information. For details, refer to the following related descriptions. Details are not described herein again.

S34: The terminal displays a first interface, where a first control (for example, the first recommendation) is displayed on the first interface, and the first control includes the target article information and the first interpretable copywriting (for example, recommendation information corresponding to the first data).

As described above, for different push messages, push message content displayed on the terminal is also different. For details, refer to the following related descriptions. Details are not described herein again.

S35: The terminal sends a first request to the server in response to a first operation on a first control, where the first request carries an identifier of the push message, the first request is used to request the server to obtain content of the target article and data of a second interpretable copywriting (for example, the second data) based on the identifier of the push message, and the second data is related to the first data. Correspondingly, the server receives the first request sent by the terminal.

As described above, for different user behavior information, content requested by the first request sent by the terminal to the server is different. For details, refer to the following related descriptions. Details are not described herein again.

S36: The server obtains the content of the target article and the data of the second interpretable copywriting based on the first request.

As described above, for different requests received by the server, content obtained from the server is also different. For details, refer to the following related descriptions. Details are not described herein again.

S37: The server sends the content of the target article and the data of the second interpretable copywriting to the terminal, and correspondingly, the terminal receives the content of the target article and the data of the second interpretable copywriting sent by the server.

As described above, for different requests received by the server, content obtained from the server is also different. In this case, content sent by the server to the terminal is also different. For details, refer to the following related descriptions. Details are not described herein again.

S38: The terminal displays a second interface, where the second interface displays the content of the target article and the second data displayed by using a display template, and further displays related data of a category to which the target article belongs. The display template is determined based on the second data by the terminal.

As described above, for different content sent by the server to the terminal, content displayed on the terminal is also different. For details, refer to the following related descriptions. Details are not described herein again.

In an interest scenario, the user behavior information includes user interest category information, the target article is determined by the server based on the interest category information, and the first data is related to the target article information and the interest category information. The second data displayed on the second interface specifically includes: the second data includes at least one of the following: a ranking list of user interests and a historical behavior corresponding to the user interests.

In a geographical hot spot scenario, the user behavior information includes geographical location information. The target article is determined by the server based on geographical location information of a user, and the first data is related to the target article information and the geographical location information. The second data displayed on the second interface specifically includes: the second data includes at least one of the following: a regional hot spot event ranking list, a historical development trace of a regional hot spot event, and a popularity value change of a regional hot spot event within preset time.

In a subscription scenario, the user behavior information includes subscription dynamic category information, and the subscription dynamic category information includes subscription data of a user. The target article is determined by the server based on the subscription data of the user, and the first data is related to the target article information and the subscription dynamic category information. The second data displayed on the second interface specifically includes: the second data includes at least one of the following: statistical information of user subscriptions, comment content of a user article, and a subscription dynamic followed by the user.

In a social scenario, the user behavior information includes social dynamic category information, and the social dynamic category information includes friend information of a user. The target article is determined by the server based on the friend information of the user, and the first data is related to the target article information and the social dynamic category information. The second data displayed on the second interface specifically includes: the second data includes at least one of the following: statistical information of friends of the user, a dynamic shared and commented by a friend of the user, and a dynamic in a friend circle of the user.

The following separately describes in detail the message push method shown in FIG. 3A for the foregoing four scenarios.

Scenario 1, user interest.

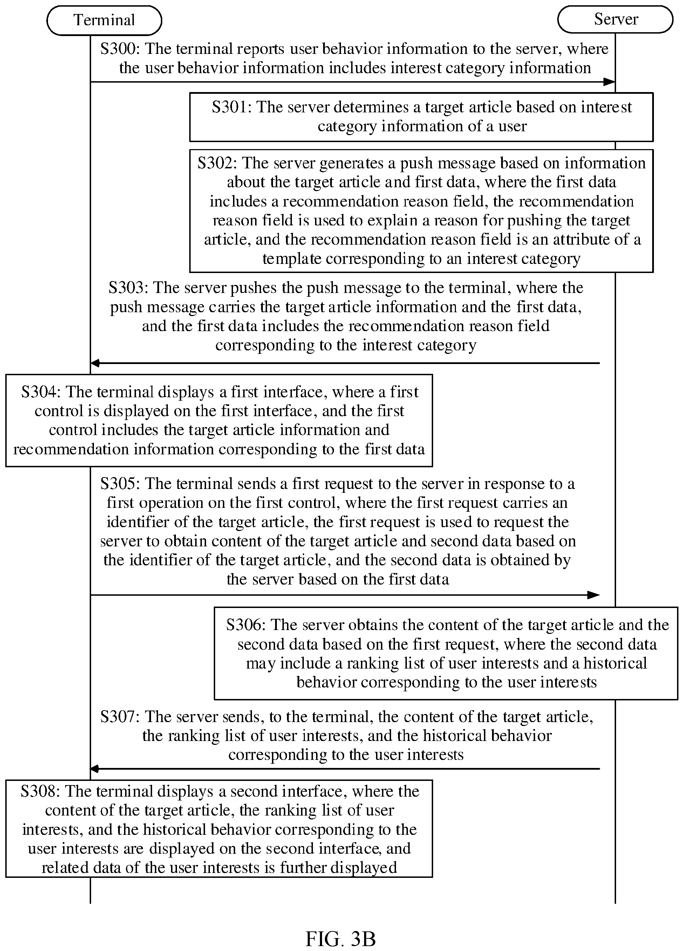

FIG. 3B is a schematic flowchart of a message push method in a user interest scenario according to an embodiment of this application. The method may be applied to the communication system shown in FIG. 2A. The method includes the following steps.

S300: A terminal reports user behavior information to a server, where the user behavior information includes interest category information. Correspondingly, the server receives the user behavior information reported by the terminal.

The interest category information may be classified based on different dimensions, for example, classified based on time, where the interest category information may include hourly interest category information and daily interest category information; and classified based on temperature, where the interest category information may include spring interest category information, summer interest category information, autumn interest category information, and winter interest category information. Certainly, this is not specifically limited in this embodiment of this application.

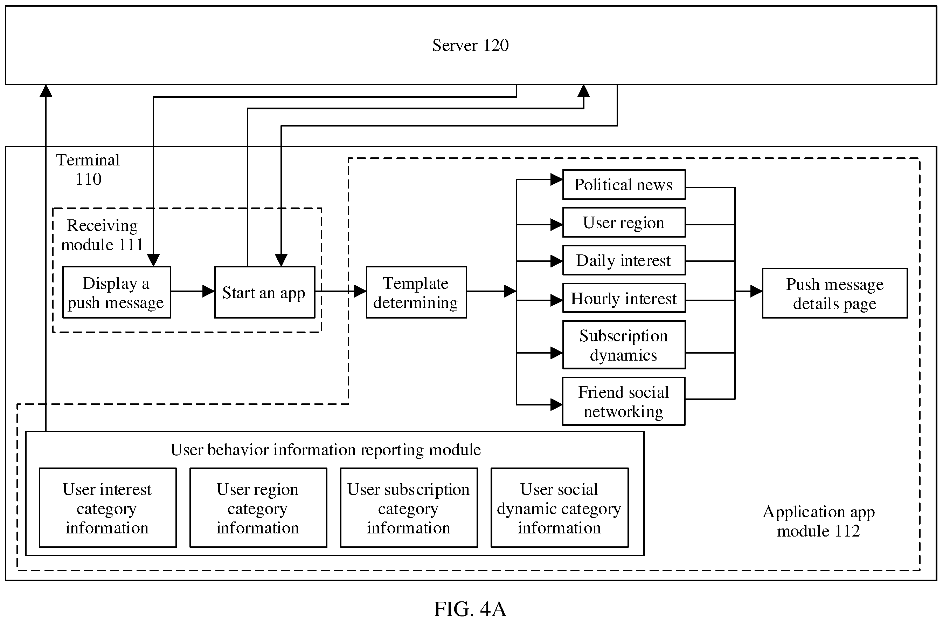

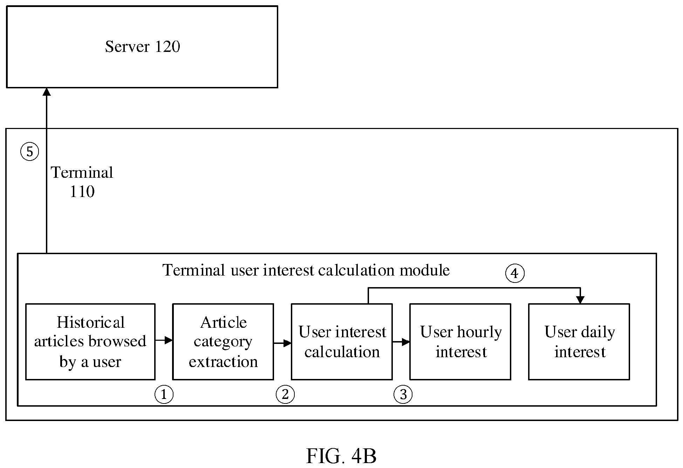

The interest category information of the user may be determined by the terminal based on historical behavior data of the user. Specifically, FIG. 4A is a software architecture of the communication system shown in FIG. 2A. A terminal 110 shown in FIG. 4A may include a receiving module 111 and an application (application, app) module (application app module for short) 112. The receiving module 111 is configured to receive a message on the terminal 110, and present the message in a notification bar of the terminal 110. The application app module 112 is configured to execute related service logic after starting a browsing application, including detailed content presentation of the message, related recommendation, user interest calculation, and the like. With reference to FIG. 4A and FIG. 4B, the application app module 112 may include a terminal user interest calculation module. The terminal may perform, by using the terminal user interest calculation module, an operation shown in FIG. 4B: ① The terminal may obtain a historical article browsed by a user. ② The terminal may extract an article category of a historical article browsed by the user. The article category may include but is not limited to: a humanities category, a news category, a natural science category, a medical category, and the like. In addition, ③ the terminal may also group article categories corresponding to n historical articles by hour, and perform calculation on each group by using the following weight calculation formula, to obtain an interest vector weight of the user in each hour. For example, an expression of the weight calculation formula is as follows:

$$score = \left(\frac{user\ tagPV}{user\ PV}\right) * log\left(\frac{user\ num}{tag\ UV+1}\right) * e^{\alpha t} * w_{cate},$$

where

$\frac{user\ tagPV}{user\ PV}$ indicates a frequency at which a user taps a tag, $log\left(\frac{user\ num}{tag\ UV+1}\right)$ indicates a generalization degree of the tag, $e^{\alpha t}$ indicates a time attenuation factor, indicates that attenuation is performed based on time, and $w_{cate}$ indicates a weight of an article category.

The terminal obtains an hourly (using 60 minutes as a minimum unit) interest vector of the user according to a preset sequence, where the preset sequence may be a descending order.

For example, it is assumed that the user has recently read 40 articles related to sports, 30 articles related to technology, 23 articles related to politics, three articles related to automobiles, two articles related to society, one article related to health, and 1 article related to entertainment, and a total of 100 articles are read.

Logic for calculating user interests on a device side is as follows:

It is assumed that an inverse document frequency (inverse document frequency, IDF) index value of a sports category is one, time attenuation is one, a classification privilege escalation is two, and a sports category interest weight is (40/100) *1*1*2=0.8, where the IDF value corresponds to the generalization degree, the classification privilege escalation corresponds to the weight of the article classification, and 40/100 corresponds to the frequency.

It is assumed that an IDF value of the science and technology category is 1.3, time attenuation is 0.9, a classification privilege escalation is two, and an interest weight of the technology category is (30/100)*1.3*0.9*2=0.7.

It is assumed that an IDF value of the politics category is 0.55, time attenuation value is one, a classification privilege escalation is four, and an interest weight of the politics category is (23/100)*0.55*1*4=0.5.

It is assumed that an IDF value of the automobiles category is three, time attenuation is 0.7, a classification privilege escalation is three, and an interest weight of the automobiles category is (3/100)*3*0.7*3=0.19.

It is assumed that an IDF value of the society category is two, time attenuation is one, a classification privilege escalation is five, and an interest weight of the society category is (2/100)*2*1*5=0.2.

It is assumed that an IDF value of the health category is two, time attenuation is one, a classification privilege escalation is five, and an interest weight of the health category is (1/100)*2*1*5=0.1.

It is assumed that an IDF value of the entertainment category is two, time attenuation is one, a classification privilege escalation is five, and an interest weight of the entertainment category is (1/100)*2*1*5=0.1.

Similarly, ④ the terminal may also collect statistics on the article categories corresponding to the n historical articles in a preset time period of the user, and calculate an interest vector weight of the user by using the foregoing weight calculation formula. The terminal may obtain the daily (using 24 hours as a minimum unit) interest vector of the user based on the interest vector weight of the user and according to a preset sequence.

Finally, (5) the terminal reports the user behavior information such as interest data of the user to the server.

S301: The server determines a target article based on user interest category information.

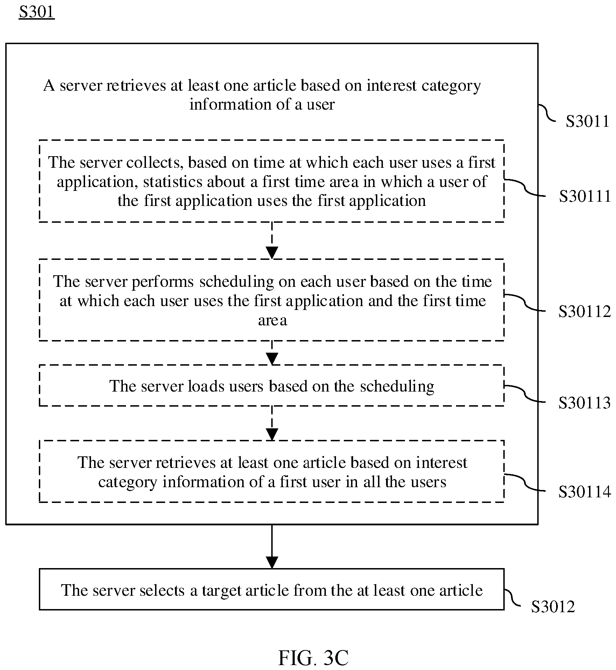

In a specific implementation, as shown in FIG. 3C, S301 may include S3011 and S3012. S3011 and S3012 may be specifically implemented as follows:

S3011: The server retrieves at least one article based on the interest category information of the user.

In a specific implementation, the interest category information of the user may further include time at which the user uses a first application. As shown in FIG. 3C, S3011 may include S30111, S30112, S30113, and S30114. S30111, S30112, S30113, and S30114 may be specifically implemented as follows:

S30111: The server collects, based on time at which each user uses the first application, statistics about a first time area in which the user of the first application uses the first application.

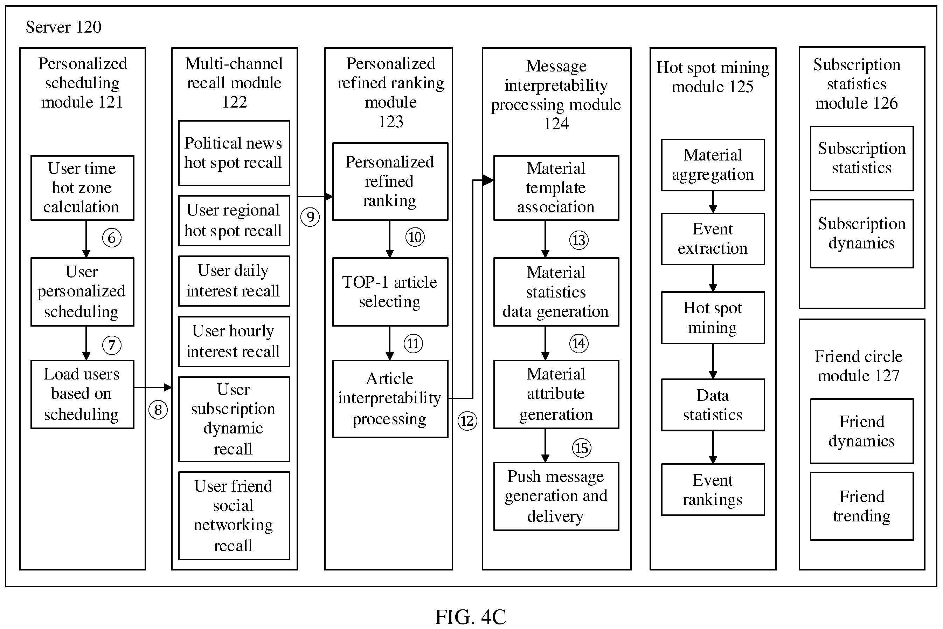

Specifically, as shown in FIG. 4C, the server 120 may include a personalized scheduling module 121, a multi-channel recall module 122, a personalized refined ranking module 123, a message interpretability processing module 124, a hot spot mining module 125, a subscription (source) statistics module 126, and a friend circle module 127. The personalized scheduling module 121 is configured to calculate to which users a push (push) message is sent at a specific moment. The multi-channel recall module 122 is configured to recall different articles based on a channel selected by the user, and the articles are in a one-to-one correspondence with an interpretability template. The personalized refined ranking module 123 is configured to select a message most related to the user through a sorting algorithm for pushing. The message interpretability processing module 124 is configured to perform interpretability processing on a message to be pushed, select a template, and fill in related data. The hot spot mining module 125 is configured to calculate real-time data related to national hot spot messages or regional hot spot messages, including hot events, related popularity value changes, and a hot spot ranking list. The subscription (source) statistics module 126 is configured to calculate data related to a subscription dynamic category message, including a dynamic of a source subscribed by a user and some real-time statistics data of the source. The friend circle module 127 is configured to calculate data related to a social dynamic category message, including a dynamic of a friend of a user, hot rankings in a friend circle of a user, and the like. The personalized scheduling module shown in FIG. 4C may perform the following operation: ⑥ The personalized scheduling module of the server collects, based on time at which each user uses the first application, statistics about a first time area (that is, a time hot area) in which the user of the first application uses the first application.

For example, in Example 1, it is assumed that the first application is an application A, and users of the application A may include a user A, a user B, a user C, and a user D. The user A uses the application A at 9:00, 9:30, and 10:00. The user B and the user C use the application A at 12:00, 13:00, 13:50, and 14:00. The user D uses the application A at 18:00, 19:00, and 20:00. In this case, the first time area that the server may collect statistics on the application A may include 9:00 to 10:00, 12:00 to 14:00, and 18:00 to 20:00.

For example, in Example 2, it is assumed that time at which the user A uses the application A is 9:00 to 9:30, time at which the user B uses the application A is 9:15 to 9:30, time at which the user C uses the application A is 9:30 to 10:00, and time at which the user D uses the application A is 9:45 to 10:00. In this case, the first time area in which the server may collect statistics on the application A may include 9:00 to 10:00.

For example, it is assumed that a user likes to browse a browser application for more than 30 minutes at a moment, a time hot spot of the user is captured in personalized scheduling, every 15 minutes is a shift, and two push messages are recommended to the user within the 30 minutes.

S30112: The server performs scheduling on each user based on time at which each user uses the first application and the first time area.

Specifically, the personalized scheduling module shown in FIG. 4C may perform the following operation: ⑦ The server may obtain, based on the time at which each user uses the first application and the first time area, a fixed time corresponding to each user; and the server may perform scheduling on each user based on the fixed time corresponding to each user.

The foregoing example 1 is still used. The server may obtain, based on the time at which each user uses the first application and the first time area, the fixed time corresponding to each user. For example, the user A corresponds to 9:00 to 10:00, the user B and the user C correspond to 12:00 to 14:00, and the user D corresponds to 18:00 to 20:00. The user A, the user B, the user C, and the user D are scheduled, and a scheduling sequence is obtained as follows: the user A, the user B, the user C, and the user D.

The foregoing example 2 is still used. The server may obtain, based on the time at which each user uses the first application and the first time area, the fixed time corresponding to each user. For example, the user A corresponds to 9:00 to 9:30, the user B corresponds to 9:15 to 9:30, the user C corresponds to 9:30 to 10:00, and the user D corresponds to 9:45 to 10:00. The user A, the user B, the user C, and the user D are scheduled, and a scheduling sequence is obtained as follows: the user A, the user B, the user C, and the user D.

S30113: The server loads users based on the scheduling.

Specifically, the personalized scheduling module shown in FIG. 4C may perform the following operation: ⑧ The server loads each user based on the scheduling, and sends a loading result to the multi-channel recall module 122.

The foregoing example 1 is still used. For example, the foregoing obtained scheduling sequence is the user A, the user B, the user C, and the user D. In this way, when the user A is loaded at 9:00 to 10:00, a message may be pushed to user A at 9:00 to 10:00; when the user B and the user C are loaded at 12:00 to 14:00, a message may be pushed to the user B and the user C at 12:00 to 14:00; and when the user D is loaded at 18:00 to 20:00, a message may be pushed to the user D at 18:00 to 20:00.

The foregoing example 2 is still used. For example, the foregoing obtained scheduling sequence is the user A, the user B, the user C, and the user D. In this way, when the user A is loaded at 9:00 to 10:00, a message may be pushed to the user A at 9:00 to 10:00; when the user B and the user C are loaded at 12:00 to 14:00, a message may be pushed to the user B and the user C at 12:00 to 14:00; and when the user D is loaded at 18:00 to 20:00, a message may be pushed to the user D at 18:00 to 20:00.

S30114: The server retrieves at least one article based on interest category information of a first user of all users.

Specifically, in S30113, after the server loads the users based on the scheduling, the server may retrieve at least one associated article based on the interest category information of the first user. Specifically, as shown in FIG. 4C, the server 120 may include the multi-channel recall module 122. The multi-channel recall module 122 is configured to recall different articles based on a channel selected by the user, and the articles are in a one-to-one correspondence with an interpretability template. The multi-channel recall module 122 shown in FIG. 4C may include a user daily interest recall (unit) and a user hourly interest recall (unit). The multi-channel recall module 122 shown in FIG. 4C may perform the following operation: ⑧ The server recalls, based on the interest category information of the first user, a plurality of articles separately by using the user daily interest recall (unit) and the user hourly interest recall (unit) in the multi-channel recall module 122.

S3012: The server selects a target article from the at least one article.

In a specific implementation, the server may determine a score of each of the at least one article of the first user. The server may select the target article from the at least one article based on the score of each article. Specifically, the server may select an article with a highest score from the at least one article as the target article.

Specifically, as shown in FIG. 4C, the server 120 may include the personalized refined ranking module 123 and the message interpretability processing module 124. The personalized refined ranking module 123 is configured to select a message most related to the user through a sorting algorithm for pushing. The personalized refined ranking module 123 shown in FIG. 4C may perform the following operation: ⑩ The personalized refined ranking module of the server determines the score of each of the at least one article of the first user, to perform personalized refined ranking on the at least one article. The server may determine the score of each article in the following two manners:

A first manner is a machine learning manner.

The server pre-trains a score model. The score model may be obtained by training based on a user, key information of the user, a sample article, a feature of an article, and an article score. The article is used as an input of the score model, and the article score is used as an output of the score model. Specifically, the server may input each of the at least one article into the score model, and output the score of each article.

A second manner is a statistical calculation manner.

Specifically, the server may determine the score of each article of the user based on a weight of interest category information of the user and a matching relationship between the interest category information of the user and a category to which the article belongs. A calculation expression is as follows:

$$score = \sum_i w_i * match_i(user, doc),$$

where

score represents a score of an article, i represents an $i^{th}$ category of the article, $w_i$ represents a weight of the $i^{th}$ category, and $match_i(*)$ represents a matching scoring method of the $i^{th}$ category.

For example, it is assumed that the user behavior information of the user may include information such as region category information, hot spot category information, interest category information, subscription category information, and sociality category information. A weight of the region category information is three, a weight of the hot spot category information is five, a weight of the interest category information is four, a weight of the subscription category information is one, and a weight of the sociality category information is two. A plurality of retrieved articles may include a first article, a second article, and a third article. Categories to which the first article belongs may include: a region category, a hot spot category, and an interest category. Categories to which the second article belongs may include: an interest category, a subscription category, and a sociality category. Categories to which the third article belongs may include: a subscription category and sociality category. If a category in the user behavior information of the user matches a category to which an article belongs, $match_i(*)$ is 1. Alternatively, if a category in the user behavior information of the user does not match a category to which an article belongs, $match_i(*)$ is. Therefore, a score of the first article is 3*1+5*1+4*1=12, a score of the second article is 4*1+1*1+2* 1=7, and a score of the third article is 1*1+2*1=3.

After the score of each article is obtained, the personalized refined ranking module 123 shown in FIG. 4C may perform the following operation: ⑪ The personalized refined ranking module of the server selects an article with a highest score as the target article. For example, if the first article has a highest score, the server may determine the first article as the target article.

In another possible implementation, the server may calculate an interpretability score and a correlation score during hot spot recall based on region information of the user, a device-side interest profile of the user, and a global hot spot, and select the target article based on the score.

For example, it is assumed that a statistical method is used to calculate a correlation score. A regional candidate article is an article about the epidemic in city B, and a regional match is calculated as one point. An interest candidate article is an article related to the Winter Olympics, and matches a sports interest of the user, and a daily interest match is calculated as one point. A weight of regional hot spot matching is two, and a weight of interest matching is one. In this case, the regional candidate article is determined as the target article based on the foregoing score calculation formula.

In addition, in a push process in a next period of time, if the article does not change, the server selects an interest candidate article as the target article.

S302: The server generates a push message based on information about the target article (for example, the target article information) and the first data. The first data includes a recommendation reason field, the recommendation reason field is used to explain a reason for pushing the target article, and the first data is determined by the server based on the target article information.

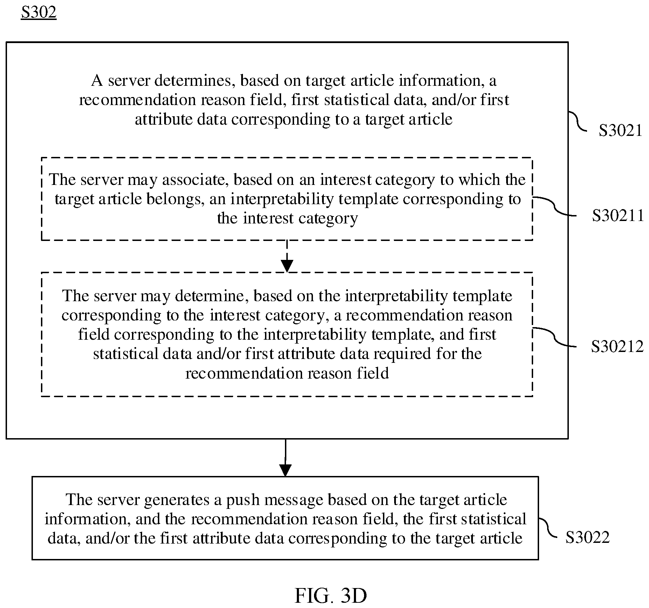

In a specific implementation, as shown in FIG. 3D, S302 may include S3021 and 53022. S3021 and S3022 may be specifically implemented as follows:

S3021: The server determines, based on the target article information, a recommendation reason field (for example, the recommendation reason field) corresponding to the target article, first statistical data, and/or first attribute data.

Specifically, the server pre-associates an interpretability template on a terminal side with an article recall channel on a server side. Related descriptions of the interpretability template are as follows: Specifically, a user daily interest recall channel of the server is associated with a daily interest interpretability template of the terminal. Second attribute data may be determined by the server based on attribute data that needs to be filled in the interpretability template on the terminal side. Second statistical data may alternatively be obtained by the server by collecting statistics based on statistical data that needs to be filled in the interpretability template on the terminal side. Second data may include the second statistical data and/or the second attribute data. The first data is key data of the second data. Therefore, the server may determine the first data based on the second data. The first data may include the recommendation reason field (for example, the recommendation reason field) corresponding to the article, the first statistical data, and/or the first attribute data.

The category to which the target article belongs may include more than one category. In this case, a final category to which the target article belongs may be determined based on a weight of each category. For example, the category to which the target article belongs includes a region category, a hot spot category, and an interest category, and a weight of the region category is three, a weight of the hot spot category is five, and a weight of the interest category is four. In this case, the server may determine a category with a largest weight as the final category to which the target article belongs. That is, the category to which the target article belongs is the hot spot category.

In a specific implementation, as shown in FIG. 3D, S3021 may include S30211 and S30212. S30211 and S30212 may be specifically implemented as follows: S30211: The server may associate, based on the interest category to which the target article belongs, an interpretability template (for example, the first template) corresponding to the interest category. Specifically, the personalized refined ranking module 123 shown in FIG. 4C may perform the following operations: 12 The personalized refined ranking module of the server performs article interpretability processing based on the target article, to obtain the recommendation reason field. Specifically, as shown in FIG. 4C, the server 120 may include the message interpretability processing module 124. The message interpretability processing module 124 is configured to perform interpretability processing on a message to be pushed, select a template, and fill in related data. The message interpretability processing module 124 shown in FIG. 4C may perform the following operation: ⑬ The message interpretability processing module 124 of the server associates the target article with the interpretability template. Specifically, the server pre-associates each recall channel in the multi-channel recall module 122 with the interpretability template on the terminal side. For example, a user daily interest recall channel corresponds to a daily interest template on the terminal side. S30212: The server may determine, based on the interpretability template corresponding to the interest category, the recommendation reason field corresponding to the interpretability template, and the first statistical data and/or the first attribute data required for the recommendation reason field. Specifically, the message interpretability processing module 124 shown in FIG. 4C may perform the following operation: ⑭ The server may perform data statistics based on the statistical data required for the recommendation reason field. ⑮ The server may obtain the attribute data based on the attribute data required for the recommendation reason field.

S3022: The server generates a push message based on the target article information, the recommendation reason field corresponding to the target article, the first statistical data, and/or the first attribute data.

Specifically, the server fills the recommendation reason field with the first statistical data and/or the first attribute data, to obtain a first interpretable copywriting. The server uses the target article information and data of the first interpretable copywriting as the push message.

That is, the push message carries the recommendation reason field. Specifically, for example, the server may associate the category to which the target article belongs with a category of an interpretability template. The server determines the recommendation reason field based on the interpretability template associated with the target article. The recommendation reason field is carried in the push message, and code of the recommendation reason field may be expressed as follows:

```
"message": {
        "notification": {
            "reason_template": "reason_template",
            "reason_statistics": {"key": "value"},
            "reason_attribute": { "key": "value"},
            "reason_score": "reason_score"
        },
    }
```

The "reason_template" indicates the used interpretability template on the device side.

The "reason_statistics" indicates statistics data to be filled in the template.

The "reason_attribute" indicates attribute data to be filled in the template.

The "reason_score" indicates a comprehensive score of the article recommended to the user. A higher score indicates higher interpretability and more relevance to the user.

For example, the category to which the target article belongs is a daily interest category, and the server may associate the target article with an interpretability template of the daily interest category. In this case, the server may determine that the target article is associated with the interpretability template of the daily interest category. Therefore, the server may determine a recommendation reason field of the target article, and code of the recommendation reason field may be expressed as follows:

```
"message": {
        "notification": {
            "reason_template": "[Guess you like] [category] category articles for
            you",
            "reason_statistics": {"key": "value"},
            "reason_attribute": {"category":"Sports"},
            "reason_score":"1"
        },
    }
```

S303: The server pushes the push message to the terminal. Correspondingly, the terminal receives the push message pushed by the server, where the push message carries the target article information and data of a first interpretable copywriting.

Specifically, after the server generates the push message, the message interpretability processing module 124 shown in FIG. 4C may perform the following operation: As shown in FIG. 4D-1 and FIG. 4D-2, ⑯ the server delivers the push message to the terminal.

The push message may further carry abstract information of the target article, and the abstract information of the target article may include an abstract of the target article and a name (or referred to as a title) of the target article. The push message may further include a connection address of the target article, for example, a uniform resource locator (uniform resource locator, URL).

S304: The terminal displays a first interface, where a first control (for example, the first recommendation) is displayed on the first interface, and the first control includes abstract information (for example, the target article information) of the target article and the first interpretable copywriting (for example, recommendation information corresponding to the first data).

For example, on the interface 21 shown in FIG. 1B, the control 211 is displayed on the interface 21. The control 211 presents abstract information of the first article and a first interpretable copywriting 2111 "[Guess you like] Sports category articles for you".

S305: The terminal sends a first request to the server in response to a first operation on the first control, where the first request carries an identifier of the push message, the first request is used to request the server to obtain content of the target article and data of a second interpretable copywriting (for example, the second data) based on the identifier of the push message, and the second data is related to the first data. Correspondingly, the server receives the first request sent by the terminal.

The terminal receives the first operation on the first control. The first operation may include a tap operation, a press operation, or the like. The tap operation may include a single-tap operation, a double-tap operation, a multi-tap operation, or the like. For example, the user taps the control 211 shown in FIG. 1B. In this case, the terminal receives a tap operation performed by the user on the control 211.

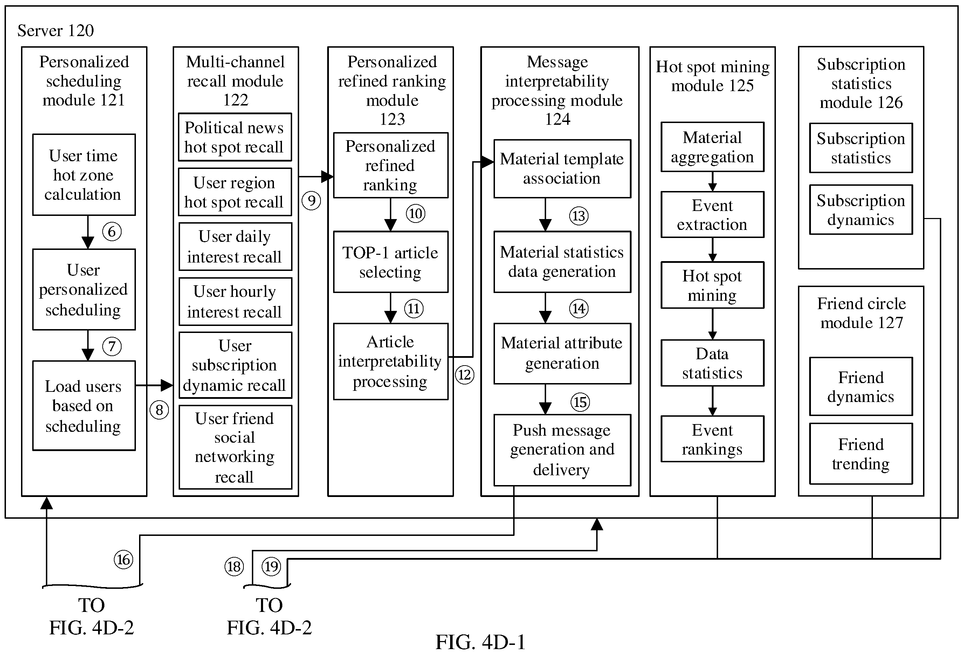

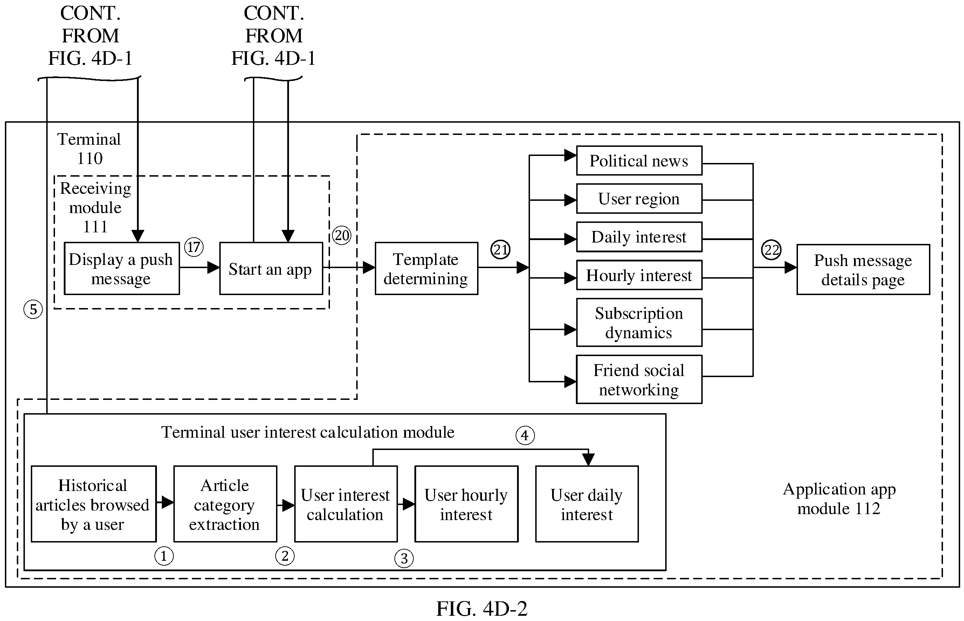

Specifically, the receiving module 111 of the terminal 110 shown in FIG. 4D-2 may perform the following operation: ⑰ The terminal receives the operation performed by the user on the first control, and starts the app. The app may be understood as a push application, and corresponds to a server. When a user starts the push application, the server may learn a user identifier of the push application. In this way, the app establishes a connection to the server.

The terminal sends the first request to the server in response to the first operation Specifically, the receiving module 111 of the terminal 110 shown in FIG. 4D-2 may perform the following operation: ⑱ The terminal sends, to the server, a request used to request to obtain, from the server, the content of the target article and the data of the second interpretable copywriting. The request carries the identifier of the push message, and the server may obtain, based on the identifier of the push message, the target article corresponding to the push message and the second data corresponding to the first data. That the first data is related to the second data may be understood as follows: The second data is complete data corresponding to the target article, and the first data is key data of the second data.

S306: The server obtains the content of the target article and the data of the second interpretable copywriting based on the first request, where the data may include a ranking list of user interests and a historical behavior corresponding to the user interests.

S307: The server sends the content of the target article, the ranking list of the user interests, and the historical behavior corresponding to the user interests to the terminal, and correspondingly, the terminal receives the content of the target article, the ranking list of the user interests, and the historical behavior corresponding to the user interests that are sent by the server.

Specifically, as shown in FIG. 4C, the server 120 may include the hot spot mining module 125, the subscription (source) statistics module 126, and the friend circle module 127. The hot spot mining module 125 is configured to calculate real-time data related to national hot spot messages or regional hot spot messages, including hot events, related popularity value changes, and a hot spot ranking list. The subscription (source) statistics module 126 is configured to calculate data related to a subscription dynamic category message, including a dynamic of a source subscribed by a user and some real-time statistics data of the source. The friend circle module 127 is configured to calculate data related to a social dynamic category message, including a dynamic of a friend of a user, hot rankings in a friend circle of a user, and the like. The hot spot mining module 125, the subscription statistics module 126, and the friend circle module 127 of the server 120 shown in FIG. 4D-1 may perform the following operations: ⑲ The server obtains the content of the target article and the data of the second interpretable copywriting based on the request, and sends the content and the data to the terminal 110. Specifically, the server may obtain entire content of the target article based on a URL of the target article. In addition, the hot spot mining module, the subscription statistics module, and the friend circle module of the server obtain the data of the second interpretable copywriting.

In some embodiments, the data of the second interpretable copywriting is related data of a category to which the target article belongs. For example, the category to which the target article belongs is a daily interest category and an hourly interest category, and the data of the second interpretable copywriting may be a daily/hourly interest of the user, a ranking list corresponding to the user interests, and a historical behavior corresponding to the user interests. Correspondingly, the data of the second interpretable copywriting obtained by the server may be represented by code as follows: For detailed messages of daily and hourly interest categories, the following is added to a "reason content" field:

```
"message": {
    "reason_content": {
        "user_interest"://A daily or hourly interest of a user is indicated
        "doc_rank"://A ranking list corresponding to the user interest is indicated
```

```
        "user_history"://A historical behavior corresponding to the user interest is
        indicated
    }
}
```

For example, the data of the second interpretable copywriting is a daily/hourly interest of the user, and the data of the second interpretable copywriting may be represented by code as follows:

```
"reason_content": {
        "user_interest":[{"Sports"}:0.8"},{"Technology":"0.7"},{"Politics":"0.5"},
{"Automobiles":"0.2"},{"Society":"0.2"},{"Health":"0.1"},{"Entertainment":"0.1"}],
        }
```

Certainly, the server also pushes, to the terminal, other related data of the category to which the target article belongs. Correspondingly, the terminal receives the other related data of the category to which the target article belongs.

For example, the category to which the target article belongs is an interest category. The server selects an article from articles of the interest category of the user, for example, articles related to automobiles, and pushes the article. The related data may be represented by code as follows:

```
"reason_content": {
    "doc_rank": [{"docid": "docid1 ", "title": "The story of the AITO M5 car owner No
fear
    of anxiety and join a journey of exploration
 into distant places","url":"https://doc_url.com"},
    }
```

S308: The terminal displays a second interface, where the second interface displays the content of the target article, the ranking list of user interests, and the historical behavior corresponding to the user interests, and further displays the related data of the category to which the target article belongs, for example, related data of the user interests.

An interpretability template may be preset on the terminal side. The interpretability template has a plurality of categories, and the plurality of categories include but are not limited to: a national hot spot category, a regional hot spot category, a daily interest category, an hourly interest category, a subscription dynamic category, a social dynamic category, and the like. For example, the plurality of categories of templates preset on the terminal side include but are not limited to:

(National hot spot category) "[National hot spot] Event [hot_value] popularity"
(Regional hot spot category) "[Regional hot spot] [people_num] people around you are watching"
(Daily interest category) "[Guess you like] [category] category articles for you"
(Hourly interest category) "[Guess you like] You follow articles of the [category] category at this time point"
(Subscription dynamic category) "[Subscription dynamic] Your subscriptions [source] have been updated"
(Social dynamic category) "[Friend recommendation] Your friend [friend] is recommended to others"

Characters in the square brackets indicate placeholders that are replaced with specific values corresponding to the placeholders as keys during actual display.

Specifically, S308 may include S3081 and S3082. S3081 and S3082 may be specifically implemented as follows:

S3081: The terminal obtains, based on the data of the second interpretable copywriting, an interpretability template corresponding to the data of the second interpretable copywriting.

Specifically, the application app module 112 of the terminal 110 shown in FIG. 4D-2 may perform the following operation: ⑳ The terminal 110 selects an interpretability template based on the data of the second interpretable copywriting. For example, the terminal 110 may select a daily interest template or an hourly interest template. ㉑ The terminal fills the interpretability template with the data of the second interpretable copywriting, to obtain the second interpretable copywriting.

S3082: The terminal displays the second interface, where the content of the target article and the second interpretable copywriting are displayed on the second interface, and the related data of the category to which the target article belongs is further displayed on the second interface.

Specifically, the application app module 112 of the terminal 110 shown in FIG. 4D-2 may perform the following operation: ㉒ The terminal displays a push message details page, that is, a second interface.

For example, on the interface 22 shown in FIG. 1C, the area 222 and the area 223 are on the interface 22. The content of the first article is presented in the area 222, for example, "Blessings to the Winter Olympics athletes of city A! Let's send blessings to the Olympic athletes together", and "In the eager anticipation of hundreds of millions of Chinese people, the 2022 Winter Olympics in city A has come to an end. Let's send blessings to Olympic athletes together." A second interpretable copywriting, for example, "Image of your interest", is presented in the area 223. The area 223 presents a situation about each category that the user is interested in, for example, sports 0.8, technology 0.7, politics 0.5, automobiles 0.2, society 0.2, health 0.1, and entertainment 0.1.

The related data of the category to which the target article belongs is further displayed on the second interface. For example, the area 224 is displayed on the interface 22 shown in FIG. 1C, and an article related to automobiles is displayed in the area 224, for example, "The story of the AITO M5 car owner No fear of anxiety and join a journey of exploration into distant places", is displayed in the area 224.

As described above, the user behavior information of the user is not limited to interest category information, and may further include regional hot spot category information, subscription dynamic category information, and community dynamic information. As shown in FIG. 4A, the terminal may report different information to the server. There are different application scenarios for different information. The following describes the different scenarios in detail.

Scenario 2, regional hot spot.

A message push method provided in this embodiment of this application is applied to the regional hot spot scenario. The method may be applied to the communication system shown in FIG. 4C. Compared with the method of the interest scenario, the method has the following differences:

In S400, a difference from S300 lies in that, user behavior information reported by a terminal to a server may include regional hot spot information, for example, the regional hot spot information may include user location information.

For specific implementation of S400, refer to related descriptions in S300. Details are not described herein again.

S401: The server determines a target article based on the user location information.

For specific implementation, refer to related descriptions in S301. Details are not described herein again.

The target article is related to the user location information. For example, if a location of a user is city B, the target article is an article related to city B.

Specifically, the multi-channel recall module 122 shown in FIG. 4C may perform the following operation: ⑧ As shown in FIG. 3D, the server recalls a plurality of articles based on location information of the first user by using a user regional hot spot recall (unit) in the multi-channel recall module 122, and determine the target article among the plurality of articles.

S402: The server generates a push message based on target article information and first data, where the first data includes a recommendation reason field, and the first data is determined by the server based on the target article information.

For specific implementation of S402, refer to related descriptions in S302. Details are not described herein again.

For example, the category to which the target article belongs is a regional hot spot category, and the server may associate the target article with an interpretability template of the regional hot spot category. In this case, the server may determine that the target article is associated with the interpretability template of the regional hot spot category. Therefore, the server may determine a recommendation reason field of the target article, and code of the recommendation reason field may be expressed as follows:

```
"message": {
        "notification": {
                "reason_template":"[Regional hot spot] [people_num] people around
                you are watching",
                "reason_statistics": {"people_num":"256,987"},
                "reason_attribute": {},
                "reason_score":"2
        },
}
```

S403: The server pushes the push message to the terminal, where the push message carries the target article information and the first data, and the first data includes the recommendation reason field corresponding to the regional hot spot category.

For specific implementation of S403, refer to related descriptions in S303. Details are not described herein again.

S404: The terminal displays a first interface, where a first control is displayed on the first interface, and the first control includes the target article information and recommendation information corresponding to the first data.

For example, on the interface 21 shown in FIG. 1D, the control 212 is displayed on the interface 21. Abstract information of a second article and first interpretable copywriting 2121 are presented on the control 212 "[Regional hot spot] 256,987 people around you are watching".

S405: The terminal sends a first request to the server in response to a first operation on the first control, where the first request carries an identifier of the push message, the first request is used to request the server to obtain content of the target article and second data based on the identifier of the push message, and the second data is related to the first data.

Specifically, the terminal receives the first operation on the first control. For example, the user taps the control 212 shown in FIG. 1D. In this case, the terminal receives a tap operation performed by the user on the control 212.

For specific implementation of S405, refer to related descriptions in S305. Details are not described herein again.

S406: The server obtains the content of the target article and the second data based on the first request, where the second data includes a regional hot spot event ranking list, a historical development trace of a regional hot spot event, and a popularity value change of a regional hot spot event within preset time.

For specific implementation of S406, refer to related descriptions in S306. Details are not described herein again.

S407: The server sends the content of the target article, the regional hot spot event ranking list, the historical development trace of the regional hot event, and the popularity value change of the regional hot spot event within the preset time to the terminal. Correspondingly, the terminal receives the content of the target article, the regional hot spot event ranking list, the historical development trace of the regional hot event, and the popularity value change of the regional hot spot event within the preset time that are sent by the server.

A method for obtaining the content of the target article is similar to the related description in S307.

For specific implementation of S407, refer to related descriptions in S307. Details are not described herein again.

In some embodiments, the second data is related data of a category to which the target article belongs. For example, the category to which the target article belongs is a regional hot spot category or a national hot spot category, and data of a second interpretable copywriting may include a popularity value change of a hot spot event within preset time, a hot spot event ranking list, and a historical development trend of a hot event.

For example, the second data may be a regional hot spot event ranking list, a historical development trend of a regional hot spot event, and a popularity value change of a regional hot spot event within preset time (for example, in a last 24 hours). Correspondingly, the second data sent by the server to the terminal may be represented by code as follows: For detailed message packets of a national hot spot category and a regional hot spot category, the following is added to a "reason content" field:

```
"message": {
    "reason_content": {
        "hot_value": // A popularity value
change of a hot spot event in the last 24 hours
        (configurable: 24 hours or 72 hours) is indicated.
        "event_trace": //A historical development trace of a hot spot event is indicated
        "doc_rank"://A hot spot event ranking list is indicated
    }
}
```

For example, the data of the second interpretable copywriting is a popularity value change of a hot spot event in the last 24 hours, and the data of the second interpretable copywriting may be represented by code as follows:

```
"reason_content": {
    "user_interest":[50,182,351,682,853,1024,1259,1681,3184,5346,6218,7891,91
    30,10158,11238,12850,11953,10971,13481,14851,10357,9547,8915,8048,8021],
}
```

Certainly, the server also pushes, to the terminal, other related data of the category to which the target article belongs. Correspondingly, the terminal receives the other related data of the category to which the target article belongs.

For example, the category to which the target article belongs is a regional hot spot category. The server selects an article from articles of the regional hot spot category, for example, articles of city B, and pushes the article. The related data may be represented by code as follows:

```
"reason_content": {
        "doc_rank": [{"docid": "docid1","title":"The largest flagship store of
        Huawei in the world opens in city B","url":"https://doc_url.com"},
    }
```

S408: The terminal displays a second interface, where the content of the target article, the regional hot spot event ranking list, the historical development trace of the regional hot event, and the popularity value change of the regional hot spot event within the preset time are displayed on the second interface, and related data of the regional hot spot category is further displayed on the second interface.

For example, on the interface 22 shown in FIG. 1E, the area 225 and the area 226 are on the interface 22. The content of the second article is presented in the area 225, for example, "New X cases of XX disease death, X cases of asymptomatic infection and X cases of confirmed disease in city B", and "So far, there have been X new deaths in city B, aged from X to X, all of whom were not vaccinated against XX pneumovirus.". "Event popularity value change" is displayed in the area 226. For example, values from 00:00 to 24:00 are respectively "50,182,351,682,853,1024,1259,

1681,3184,5346,6218,7891,9130,10158,11238,12850, 11953, 10 971,13481,14851,10357,9547,8915,8048,8021".

The related data of the regional hot spot category is further displayed on the second interface. For example, the category to which the target article belongs is the regional hot spot category. The server selects an article from articles of the regional hot spot category of the user, and pushes the article. For example, the largest flagship store of Huawei in the world opens in city B. The area 227 is displayed on the interface 22 shown in FIG. 1E, and an article related to "The largest flagship store of Huawei in the world opens in city B" is displayed in the area 227, for example, "The largest flagship store of Huawei in the world opens in city B".

Scenario 3, subscription dynamic.

A message push method provided in this embodiment of this application is applied to a subscription scenario. The method may be applied to the communication system shown in FIG. 4C. Compared with the method of the interest scenario, the method has the following differences:

S500: A difference from S300 lies in that user behavior information reported by a terminal to a server may include subscription dynamic category information, for example, the subscription dynamic category information may include user subscription information.

For specific implementation of S500, refer to related descriptions in S300. Details are not described herein again.

S501: The server determines a target article based on the user subscription information.

The target article is related to the user subscription information.

Specifically, the multi-channel recall module 122 shown in FIG. 4C may perform the following operation: ⑧ As shown in FIG. 3D, the server recalls a plurality of articles based on subscription information of the first user by using a user subscription dynamic recall (unit) in the multi-channel recall module 122, and determine the target article among the plurality of articles.

S502: The server generates a push message based on target article information and first data, where the first data includes a recommendation reason field, and the first data is determined by the server based on the target article information.

For specific implementation of S502, refer to related descriptions in S302. Details are not described herein again.

For example, the category to which the target article belongs is a subscription dynamic category, and the server may associate the target article with an interpretability template of the subscription dynamic category. In this case, the server may determine that the target article is associated with the interpretability template of the subscription dynamic category. Therefore, the server may determine a recommendation reason field of the target article, and code of the recommendation reason field may be expressed as follows:

```
"message": {
        "notification": {
                "reason_template":"[Subscription dynamic] The quantity of followers
                of [friend] you follow has been updated",
                "reason_statistics": {"":""},
                "reason_attribute": {"[friend]":"User C"},
                "reason_score":"1"
        },
}
```

S503: The server pushes the push message to the terminal, where the push message carries the target article information and the first data, and the first data includes the recommendation reason field corresponding to the subscription dynamic category.

For specific implementation of S503, refer to related descriptions in S303. Details are not described herein again.

S504: The terminal displays a first interface, where a first control is displayed on the first interface, and the first control includes the target article information and recommendation information corresponding to the first data.

For example, on the interface 21 shown in FIG. 1F, the control 213 is displayed on the interface 21. Abstract information of the third article and a first interpretable copywriting 2131 "[Subscription dynamic] A change status of a quantity of followers of a user C that is followed" are presented on the control 213.

S505: The terminal sends a first request to the server in response to a first operation on the first control, where the first request carries an identifier of the push message, the first request is used to request the server to obtain content of the target article and second data based on the identifier of the push message, and the second data is related to the first data.

Specifically, the terminal receives the first operation on the first control. For example, the user taps the control 213 shown in FIG. 1F. In this case, the terminal receives a tap operation performed by the user on the control 213.

For specific implementation of S505, refer to related descriptions in S305. Details are not described herein again.

S506: The server obtains the content of the target article and the second data based on the first request, where the second data includes statistical information of user subscriptions, comment content of a user article, and a subscription dynamic followed by the user.

For specific implementation of S506, refer to related descriptions in S306. Details are not described herein again.

S507: The server sends, to the terminal, the content of the target article, the statistical information of the user subscriptions, the comment content of the user article, and the subscription dynamic followed by the user. Correspondingly, the terminal receives the content of the target article, the statistical information of the user subscriptions, the comment content of the user article, and the subscription dynamic followed by the user that are sent by the server.

A method for obtaining the content of the target article is similar to the related description in S307.

For specific implementation of S507, refer to related descriptions in S307. Details are not described herein again.

In some embodiments, the second data is related data of a category to which the target article belongs. For example, the category to which the target article belongs is a subscription dynamic category, and data of a second interpretable copywriting may include the statistical information of the user subscriptions, the comment content of the user article, and the subscription dynamic followed by the user.

For example, the second data may be the statistical information of the user subscriptions, the comment content of the user article, and the subscription dynamic followed by the user. Correspondingly, the second data sent by the server to the terminal may be represented by code as follows:

For detailed message packets of a subscription dynamic category, the following is added to a "reason content" field:

```
"message": {
    "reason_content": {
        "source_statistics"://Statistics information of a source subscribed by a user is
        indicated
        "doc_comment"://A comment on a user article is indicated
        "source_doc"://A dynamic of the source that the user follows is indicated
    }
}
```

Certainly, the server also pushes, to the terminal, other related data of the category to which the target article belongs. Correspondingly, the terminal receives the other related data of the category to which the target article belongs.

For example, the category to which the target article belongs is a subscription dynamic category. The server selects an article from articles of the subscription dynamic category, for example, a comment on an article of a user C, and pushes the article.

S508: The terminal displays a second interface, where the content of the target article, the statistical information of the user subscriptions, the comment content of the user article, and the subscription dynamic followed by the user are displayed on the second interface, and related data of the subscription dynamic category is further displayed on the second interface.

For example, on the interface 22 shown in FIG. 1G, the area 228 and the area 229 are on the interface 22. Content of the third article is presented in the area 228, for example, "Reading method" or "Reading method (which is worth learning) that is summarized by a user C over many years and that is a six-step reading method...". The area 229 displays "Change in a quantity of fans".

The related data of the subscription dynamic category is further displayed on the second interface. For example, the category to which the target article belongs is a subscription dynamic category. The server selects an article from articles of the subscription dynamic category of the user, for example, a comment on an article of a user C, and pushes the article. The area 230 is displayed on the interface 22 shown in FIG. 1E, and an article related to "Comment on an article of the user C" is displayed in the area 230.

Scenario 4, friend circle.

A message push method provided in this embodiment of this application is applied to a friend circle scenario. The method may be applied to the communication system shown in FIG. 4C. Compared with the method of the interest scenario, the method has the following differences:

In S600, a difference from S300 lies in that user behavior information reported by a terminal to a server may include social dynamic category information, for example, the social dynamic category information may include information about a friend of the user.

For specific implementation of S600, refer to related descriptions in S300. Details are not described herein again.

S601: The server determines a target article based on the information about a friend of the user.

The target article is related to the information about a friend of the user.

Specifically, the multi-channel recall module 122 shown in FIG. 4C may perform the following operation: ⑧ As shown in FIG. 3D, the server recalls a plurality of articles based on friend information of the first user by using a user social dynamic recall (unit) in the multi-channel recall module 122, and determine the target article among the plurality of articles.

S602: The server generates a push message based on target article information and first data, where the first data includes a recommendation reason field, and the first data is determined by the server based on the target article information.

For specific implementation of S602, refer to related descriptions in S302. Details are not described herein again.

For example, the category to which the target article belongs is a social dynamic category, and the server may associate the target article with an interpretability template of the social dynamic category. In this case, the server may determine that the target article is associated with the interpretability template of the social dynamic category. Therefore, the server may determine a recommendation reason field of the target article, and code of the recommendation reason field may be expressed as follows:

```
"message": {
        "notification": {
                "reason_template": "[Social dynamic] Statistics information of a
friend
  [friend] for you",
                "reason_statistics": {"":""},
                "reason_attribute": {"friend":"D"},
                "reason_score":"1"
        },
}
```

S603: The server pushes the push message to the terminal, where the push message carries the target article information and the first data, and the first data includes the recommendation reason field corresponding to the social dynamic category.

For specific implementation of S603, refer to related descriptions in S303. Details are not described herein again.

S604: The terminal displays a first interface, where a first control is displayed on the first interface, and the first control includes the target article information and recommendation information corresponding to the first data.

For example, on the interface 21 shown in FIG. 1H, the control 214 is displayed on the interface 21. The control 214 presents abstract information of a fourth article and a first interpretable copywriting 2141 "[Social dynamic] Statistics information of the friend D for you".

S605: The terminal sends a first request to the server in response to a first operation on the first control, where the first request carries an identifier of the push message, the first request is used to request the server to obtain content of the target article and second data based on the identifier of the push message, and the second data is related to the first data.

Specifically, the terminal receives the first operation on the first control. For example, the user taps the control 214 shown in FIG. 1H. In this case, the terminal receives a tap operation performed by the user on the control 214.

For specific implementation of S605, refer to related descriptions in S305. Details are not described herein again.

S606: The server obtains the content of the target article and the second data based on the first request, where the second data includes statistical information of friends of the user, a dynamic shared and commented by a friend of the user, and a dynamic in a friend circle of the user.

For specific implementation of S606, refer to related descriptions in S306. Details are not described herein again.

S607: The server sends the content of the target article, the statistical information of friends of the user, the dynamic shared and commented by the friend of the user, and the dynamic in the friend circle of the user to the terminal. Correspondingly, the terminal receives the content of the target article, the statistical information of friends of the user, the dynamic shared and commented by the friend of the user, and the dynamic in the friend circle of the user that are sent by the server.

A method for obtaining the content of the target article is similar to the related description in S307.

For specific implementation of S607, refer to related descriptions in S307. Details are not described herein again.

In some embodiments, the second data is related data of a category to which the target article belongs. For example, the category to which the target article belongs is a social dynamic category, and the second data may include statistical information of friends of the user, a dynamic commented and shared by a friend of the user, and a dynamic in a friend circle of the user.

For example, the second data may be statistical information of friends of the user, a dynamic commented and shared by a friend of the user, and a dynamic in a friend circle of the user. Correspondingly, the second data sent by the server to the terminal may be represented by code as follows:

For detailed message packets of a social dynamic category, the following is added to a "reason content" field:

```
"message": {
    "reason_content": {
      "friend_statistics"://Statistics information of a friend of the user is indicated
      "friend_comment"://A dynamic commented and shared by a friend of the user
      is indicated
      "doc_rank"://A dynamic in a friend circle of the user is indicated
    }
}
```

Certainly, the server also pushes, to the terminal, other related data of the category to which the target article belongs. Correspondingly, the terminal receives the other related data of the category to which the target article belongs.

For example, the category to which the target article belongs is a social dynamic category. The server selects an article from articles of the social dynamic category, for example, friend circle dynamics of the friend D, and pushes the article.

S608: The terminal displays a second interface, where the content of the target article, the statistical information friends of the user, the dynamic commented and shared by the friend of the user, and the dynamic in the friend circle of the user are displayed on the second interface, and related data of a social dynamic category is further displayed on the second interface.

For example, on the interface 22 shown in FIG. 1I, the area 231 and the area 232 are on the interface 22. The content of the fourth article is presented in the area 231, for example, "Latest message of a friend D", and "The friend D watches 'the opening ceremony of the Winter Olympics' and makes a comment, and comment content is...". "Statistical image of the friend D" is displayed in the area 229.

The related data of the social dynamic category is further displayed on the second interface. For example, as shown in FIG. 1H, the category to which the target article belongs is the social dynamic category. The server selects an article from articles of the social dynamic category of the user, for example, friend circle dynamics of the friend D, and pushes the article. The area 233 is displayed on the interface 22 shown in FIG. 1I, and an article related to "Friend circle dynamics of the friend D" is displayed in the area 233.

It may be understood that, to implement the foregoing functions, the terminal includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solution. A person skilled in the art may use different methods to implement the described functions for each particular application with reference to embodiments, but it should not be considered that the implementation goes beyond the scope of this application.

In embodiments, the terminal may be divided into function modules based on the foregoing method examples, for example, each function module may be obtained through division based on each corresponding function, or two or more functions may be integrated into one processing module. The integrated module may be implemented in a form of hardware. It should be noted that, in this embodiment, division into the modules is an example, is merely logical function division, and may be other division during actual implementation.

It should be noted that all related content of the steps in the foregoing method embodiments may be cited in function description of corresponding functional modules. Details are not described herein again.

There may be another division manner during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are only examples. For example, the module or unit division is only another form of logical function division.

The units described as separate components may or may not be physically separate, and components displayed as units may be one or more physical units, and may be located in one place or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a terminal (which may be a single-chip microcomputer, a chip or the like) or a processor (processor) to perform all or some of the steps of the methods described in embodiments of this application. The storage medium includes any medium that can store program code, such as a USB flash drive, a removable hard disk, a read-only memory (read only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A message push method, comprising:

   sending user behavior information of a user to a server;
   obtaining a first message sent by the server, wherein the first message comprises target article information and first data, the first data comprises a recommendation reason field, the target article information is determined by the server based on the user behavior information, and the first data is related to the target article information and the user behavior information;
   displaying a first interface, wherein the first interface comprises a first recommendation, the first recommendation comprises first content and recommendation information corresponding to the first data, and the first content is obtained based on the target article information;
   receiving a first operation on the first recommendation;
   sending a first request to the server in response to the first operation, wherein the first request comprises an identifier of the first message, the first request is used to request the server to obtain content of a target article and second data based on the identifier of the first message, and the second data is related to the first data;
   obtaining the content of the target article and the second data from the server; and
   displaying a second interface, wherein the content of the target article and recommendation information corresponding to the second data are displayed on the second interface.

2. The method according to claim 1, wherein the method further comprises:

   obtaining a display template corresponding to the first data based on the first data, or obtaining a display template corresponding to the second data based on the second data; and
   displaying the second interface, wherein the content of the target article and the recommendation information that corresponds to the second data and that is displayed by using the display template are displayed on the second interface.

3. The method according to claim 2, wherein the obtaining a display template corresponding to the first data based on the first data, or obtaining a display template corresponding to the second data based on the second data comprises: obtaining, based on the recommendation reason field, a display template corresponding to the recommendation reason field.

4. The method according to any one of claims 1 to 3, wherein before the displaying a second interface, the method further comprises:

   receiving related data that is of a category to which the target article belongs and that is pushed by the server, wherein
   second content is further displayed on the second interface, and the second content is obtained based on the related data of the category to which the target article belongs.

5. The method according to any one of claims 1 to 4, wherein the user behavior information comprises any one of the following: geographical location information, subscription dynamic category information, social dynamic category information, and user interest category information.

6. The method according to any one of claims 1 to 5, wherein the user behavior information comprises the user interest category information; and

   the target article is determined by the server based on the interest category information, and the first data is related to the interest category information; or
   the first data is related to the target article information and the interest category information.

7. The method according to claim 6, wherein the second data displayed on the second interface specifically comprises: the second data comprises a ranking list of user interests.

8. The method according to any one of claims 1 to 5, wherein the user behavior information comprises the geographical location information; and
the target article is determined by the server based on geographical location information of the user, and the first data is related to the geographical location information; or the first data is related to the target article information and the geographical location information.

9. The method according to claim 8, wherein the second data displayed on the second interface specifically comprises: the second data comprises at least one of the following: a regional hot spot event ranking list, a historical development trace of a regional hot spot event, and a popularity value change of a regional hot spot event within preset time.

10. The method according to any one of claims 1 to 5, wherein the user behavior information comprises the subscription dynamic category information, and the subscription dynamic category information comprises subscription data of the user; and
the target article is determined by the server based on the subscription data of the user, and the first data is related to the subscription dynamic category information; or the first data is related to the target article information and the subscription dynamic category information.

11. The method according to claim 10, wherein the second data displayed on the second interface specifically comprises: the second data comprises at least one of the following: statistical information of user subscriptions, comment content of a user article, and a subscription dynamic followed by the user.

12. The method according to any one of claims 1 to 5, wherein the user behavior information comprises the social dynamic category information, and the social dynamic category information comprises friend information of the user; and
the target article is determined by the server based on the friend information of the user, and the first data is related to the social dynamic category information; or the first data is related to the social dynamic category information.

13. The method according to claim 12, wherein the second data displayed on the second interface specifically comprises: the second data comprises at least one of the following: statistical information of friends of the user, a dynamic shared and commented by a friend of the user, and a dynamic in a friend circle of the user.

14. The method according to any one of claims 1 to 5, wherein the user behavior information comprises the user interest category information, the user interest category information comprises an interest vector weight of each article category, and the interest vector weight of each article category indicates a preference degree of the user for each category of articles; and before the sending user behavior information of a user, the method further comprises:

   obtaining n historical articles browsed by the user, wherein n is a positive integer greater than 1;
   extracting article categories of the n historical articles browsed by the user; and
   determining an interest vector weight of each article category based on the article categories of the n historical articles and a tap frequency, a time attenuation factor, and a weight of each article category.

15. A message push method, applied to a communication system, wherein the communication system comprises a terminal and a server, and the method comprises:

   sending, by the terminal, user behavior information of a user to the server;
   determining, by the server based on the user behavior information, target article information and first data corresponding to the target article information, wherein the first data comprises a recommendation reason field, and the first data is related to the target article information and the user behavior information;
   generating, by the server, a first message based on the target article information and the first data;
   receiving, by the terminal, the first message sent by the server, wherein the first message comprises the target article information and the first data;
   displaying, by the terminal, a first interface, wherein the first interface comprises a first recommendation, the first recommendation comprises first content and recommendation information corresponding to the first data, and the first content is obtained based on the target article information;
   receiving, by the terminal, a first operation on the first recommendation;
   sending, by the terminal, a first request to the server in response to the first operation, wherein the first request comprises an identifier of the first message, the first request is used to request the server to obtain content of a target article and second data based on the identifier of the first message, and the second data is related to the first data;

obtaining, by the server, the content of the target article and the second data based on the first request;

sending, by the server, the target article and second data to the terminal;

receiving, by the terminal, the content of the target article and the second data that are sent by the server; and

displaying, by the terminal, a second interface, wherein the content of the target article and recommendation information corresponding to the second data are displayed on the second interface.

16. The method according to claim 15, wherein the method further comprises:

obtaining, by the terminal, a display template corresponding to the first data based on the first data, or a display template corresponding to the second data based on the second data; and

displaying, by the terminal, the second interface, wherein the content of the target article and the recommendation information that corresponds to the second data and that is displayed by using the display template are displayed on the second interface.

17. The method according to claim 15 or 16, wherein before the displaying, by the terminal, a second interface, the method further comprises:

receiving, by the terminal, related data that is of a category to which the target article belongs and that is pushed by the server, wherein

second content is further displayed on the second interface, and the second content is obtained based on the related data of the category to which the target article belongs.

18. The method according to any one of claims 15 to 17, wherein the user behavior information comprises any one of the following: geographical location information, subscription dynamic category information, social dynamic category information, and user interest category information.

19. A terminal, wherein the terminal comprises one or more processors and a memory, the memory stores code, and when the code is executed by the processor, the terminal is enabled to perform the method according to any one of claims 1 to 14.

20. A communication system, wherein the communication system comprises one or more terminals and a server, and when computer instructions are run on the terminal, the terminal is enabled to perform the method according to any one of claims 1 to 14.

21. A computer-readable storage medium, comprising computer instructions, wherein when the computer instructions are run on a terminal, the terminal is enabled to perform the method according to any one of claims 1 to 14.

9:15  Saturday October 16

21

🌐 Browser       Five minutes ago

Blessings to the Winter Olympics athletes of city A!

After the Winter Olympics in city A, let's send blessings to the Olympic athletes

211

🌐 Browser       Three minutes ago

Latest news of the epidemic in city B

New X cases of coronavirus death, X cases of asymptomatic infection and X cases of confirmed disease in city B

212

☐ Subscription account message   Two minutes ago

Reading method

Reading method (which is worth learning) that is summarized by XXX

213

☐ Friend circle   One minute ago

Latest message of a friend C

The friend C watched the opening ceremony of the "Winter Olympics"

214

Notification management

FIG. 1A

9:15 Saturday October 16

Browser      Five minutes ago

Blessings to the Winter Olympics athletes of city A!
After the Winter Olympics in city A, let's send
blessings to the Olympic athletes

[Guess you like] Sports category articles for you

Browser      Three minutes ago

Latest news of the epidemic in city B
New X cases of XX disease death, X cases of
asymptomatic infection and X cases of confirmed
disease in city B

[Regional hot spot] 256,987 people around you
are watching

Subscription
account message      Two minutes ago

Reading method
Reading method (which is worth learning) that is
summarized by a user C over many years

[Subscription dynamic] A change status of a
quantity of followers of the user C that is followed

Friend circle  One minute ago

Latest message of a friend D

The friend D watched the opening ceremony of the
"Winter Olympics"

[Social dynamic] Statistics information of the
friend D for you

Notification management

FIG. 1B

221

22

Recommendation Video Finance Epidemic Automobile Entertainment +

Cheer for the Winter Olympics in city A! Let's send blessings to the Olympics together.

Four hours ago

In the eager anticipation of hundreds of millions of Chinese people, the 2022 Winter Olympics in city A has come to an end. Let's send blessings to Olympic athletes together.

222

[Recommendation reason] Guess you like, sports category articles for you

Your interest images

223

0.8
0.7
0.5
0.2
0.1
0

Sports Technology Politics Automobile Society Health Entertainment

Personalized interest recommendation
The story of the AITO M5 car owner
No fear of anxiety and join a journey of exploration into distant places
Automobile interest

Automobile picture

224

FIG. 1C

9:15   Saturday October 16

Browser      Five minutes ago

Blessings to the Winter Olympics athletes of city A!
After the Winter Olympics in city A, let's send
blessings to the Olympic athletes

[Guess you like] Sports category articles for you

Browser      Three minutes ago

Latest news of the epidemic in city B
New X cases of XX disease death, X cases of
asymptomatic infection and X cases of confirmed
disease in city B

[Regional hot spot] 256,987 people around you
are watching

Subscription
account message   Two minutes ago
Reading method
Reading method (which is worth learning) that is
summarized by a user C over many years

[Subscription dynamic] A change status of a
quantity of followers of the user C that is followed

Friend circle   One minute ago

Latest message of a friend D

The friend D watched the opening ceremony of the
"Winter Olympics"

[Social dynamic] Statistics information of the
friend D for you

Notification management

FIG. 1D

221

22

5G.ııl 5G.ııl 📶 🔋 8:00

Recommendation Video Finance Epidemic Automobile Entertainment +

New X cases of XX disease death, X cases of asymptomatic infection and X cases of confirmed disease in city B

Four hours ago

225

So far, there have been X new deaths in city B, aged from X to X, all of whom were not vaccinated against XX pneumovirus.

[Recommendation reason] 256,987 people around you are watching

Event popularity value change

226

15000 ‒ ‒ ‒ ‒ ‒ ‒ ‒ ‒ ‒ ‒ ‒ ‒ ‒ ‒
12000 ‒ ‒ ‒ ‒ ‒ ‒ ‒ ‒ ‒ ‒ ‒ ‒ ‒ ‒
 9000 ‒ ‒ ‒ ‒ ‒ ‒ ‒ ‒ ‒ ‒ ‒ ‒ ‒ ‒
 6000 ‒ ‒ ‒ ‒ ‒ ‒ ‒ ‒ ‒ ‒ ‒ ‒ ‒ ‒
 3000 ‒ ‒ ‒ ‒ ‒ ‒ ‒ ‒ ‒ ‒ ‒ ‒ ‒ ‒
    0
       00 02 04 06 08 10 12 14 16 18 20 22 24

227

Regional hot spot recommendation

The largest flagship store of Huawei in the world opens in city B

Image

Area of city B

FIG. 1E

9:15   Saturday October 16

⊕ Browser      Five minutes ago

Blessings to the Winter Olympics athletes of city A!
After the Winter Olympics in city A, let's send
blessings to the Olympic athletes

[Guess you like] Sports category articles for you

⊕ Browser      Three minutes ago

Latest news of the epidemic in city B
New X cases of XX disease death, X cases of
asymptomatic infection and X cases of confirmed
disease in city B

[Regional hot spot] 256,987 people around you
are watching

☐ Subscription
   account message   Two minutes ago
Reading method
Reading method (which is worth learning) that is
summarized by a user C over many years

[Subscription dynamic] A change status of a
quantity of followers of the user C that is followed

☐ Friend circle   One minute ago

Latest message of a friend D
The friend D watched the opening ceremony of the
"Winter Olympics"

[Social dynamic] Statistics information of the
friend D for you

Notification management

FIG. 1F

8:00

221

22

Recommendation Video Finance Epidemic Automobile Entertainment +

Reading method

2022-08-08 00:00 published in city A

Reading method (which is worth learning) that is summarized by a user C over many years...

228

[Recommendation reason] A change status of a quantity of followers of the user C that is followed

Change in a quantity of followers

60000
40000
20000
9000
6000
3000
0

00 02 04 06 08 10 12 14 16 18 20 22 24

229

Article recommendation of the user C

230

Comment on an article of the user C

Image

FIG. 1G

**9:15 Saturday October 16**

Browser     Five minutes ago

Blessings to the Winter Olympics athletes of city A!
After the Winter Olympics in city A, let's send
blessings to the Olympic athletes

[Guess you like] Sports category articles for you

Browser     Three minutes ago
Latest news of the epidemic in city B
New X cases of XX disease death, X cases of
asymptomatic infection and X cases of confirmed
disease in city B

[Regional hot spot] 256,987 people around you
are watching

Subscription
account message     Two minutes ago
Reading method
Reading method (which is worth learning) that is
summarized by a user C over many years

[Subscription dynamic] A change status of a
quantity of followers of the user C that is followed

Friend circle   One minute ago
Latest message of a friend D
The friend D watched the opening ceremony of
the "Winter Olympics"

[Social dynamic] Statistics information of the
friend D for you

Notification management

FIG. 1H

221

22

5G ,,|||  5G ,,|||  📶                      ▬ 8:00

Recommendation Video Finance  Epidemic Automobile  Entertainment +

Latest message of a friend D

Four hours ago                                                    231

The friend D watched the opening ceremony of
the "Winter Olympics" and made a comment, and
comment content is...

[Recommendation Reason] Guess you like, statistics
information of the friend D for you
Statistical image of the friend D

```
        Sports        Technology
         0.8             0.8
                                                   232
  Health         Friend D        Politics
   0.5                             0.6

        Society        Entertainment
         0.4              0.2
```

Friend circle recommendation                              233

Friend circle dynamics of
the friend D
                                      Image

FIG. 1I

Communication system 100

FIG. 2A

Terminal 110

Antenna 1

Antenna 2

Mobile communication module
2G/3G/4G/5G
[250]

Wireless communication module
BT/WLAN/GNSS/NFC/IR/FM
[260]

Displays 2 to N
[270]

Processor
[210]

Memory 220

USB interface
[230]

Charging
management
module
[240]

Power
management
module
[241]

Charging
input

Battery [242]

FIG. 2B

**Terminal**

**Server**

S30: The terminal reports user behavior information to the server

S31: The server determines a target article based on the user behavior information

S32: The server generates a push message based on target article information and first data, where the target article information and the first data are related to the user behavior information, and the first data includes a recommendation reason field

S33: The server pushes the push message to the terminal, where the push message carries the target article information and the first data

S34: The terminal displays a first interface, where a first control is displayed on the first interface, and the first control includes the target article information and recommendation information corresponding to the first data

S35: The terminal sends a first request to the server in response to a first operation on the first control, where the first request carries an identifier of the push message, the first request is used to request the server to obtain content of the target article and second data based on the identifier of the push message, and the second data is related to the first data

S36: The server obtains the content of the target article and the second data based on the first request

S37: The server sends the content of the target article and the second data to the terminal

S38: The terminal displays a second interface, where the content of the target article and the second data are displayed on the second interface, and related data of a category to which the target article belongs is further displayed

FIG. 3A

Terminal                                                                    Server

S300: The terminal reports user behavior information to the server, where
the user behavior information includes interest category information

S301: The server determines a target article based on interest
category information of a user

S302: The server generates a push message based on information
about the target article and first data, where the first data
includes a recommendation reason field, the recommendation
reason field is used to explain a reason for pushing the target
article, and the recommendation reason field is an attribute of a
template corresponding to an interest category

S303: The server pushes the push message to the terminal, where the
push message carries the target article information and the first data,
and the first data includes the recommendation reason field
corresponding to the interest category

S304: The terminal displays a first interface, where a first
control is displayed on the first interface, and the first
control includes the target article information and
recommendation information corresponding to the first data

S305: The terminal sends a first request to the server in response to a
first operation on the first control, where the first request carries an
identifier of the target article, the first request is used to request the
server to obtain content of the target article and second data based on
the identifier of the target article, and the second data is obtained by
the server based on the first data

S306: The server obtains the content of the target article and the
second data based on the first request, where the second data
may include a ranking list of user interests and a historical
behavior corresponding to the user interests

S307: The server sends, to the terminal, the content of the target article,
the ranking list of user interests, and the historical behavior
corresponding to the user interests

S308: The terminal displays a second interface, where the
content of the target article, the ranking list of user
interests, and the historical behavior corresponding to the
user interests are displayed on the second interface, and
related data of the user interests is further displayed

FIG. 3B

S301

A server retrieves at least one article based on interest category
information of a user — S3011

The server collects, based on time at which each user uses a first
application, statistics about a first time area in which a user of
the first application uses the first application — S30111

The server performs scheduling on each user based on the time
at which each user uses the first application and the first time
area — S30112

The server loads users based on the scheduling — S30113

The server retrieves at least one article based on interest
category information of a first user in all the users — S30114

The server selects a target article from the at least one article — S3012

FIG. 3C

S302

A server determines, based on target article information, a recommendation reason field, first statistical data, and/or first attribute data corresponding to a target article

S3021

The server may associate, based on an interest category to which the target article belongs, an interpretability template corresponding to the interest category

S30211

The server may determine, based on the interpretability template corresponding to the interest category, a recommendation reason field corresponding to the interpretability template, and first statistical data and/or first attribute data required for the recommendation reason field

S30212

The server generates a push message based on the target article information, and the recommendation reason field, the first statistical data, and/or the first attribute data corresponding to the target article

S3022

FIG. 3D

Server 120

Terminal 110

Receiving module 111

Display a push message

Start an app

Template determining

Political news

User region

Daily interest

Hourly interest

Subscription dynamics

Friend social networking

Push message details page

Application app module 112

User behavior information reporting module

User interest category information

User region category information

User subscription category information

User social dynamic category information

FIG. 4A

Server 120

⑤

Terminal
110

Terminal user interest calculation module ④

| Historical articles browsed by a user | Article category extraction | User interest calculation | User hourly interest | User daily interest |

① ② ③

FIG. 4B

# Server 120

| Personalized scheduling module 121 | Multi-channel recall module 122 | Personalized refined ranking module 123 | Message interpretability processing module 124 | Hot spot mining module 125 | Subscription statistics module 126 |
|---|---|---|---|---|---|

**Personalized scheduling module 121**
- User time hot zone calculation
- ⑥
- User personalized scheduling
- ⑦
- Load users based on scheduling

⑧

**Multi-channel recall module 122**
- Political news hot spot recall
- User regional hot spot recall
- User daily interest recall
- User hourly interest recall
- User subscription dynamic recall
- User friend social networking recall

⑨

**Personalized refined ranking module 123**
- Personalized refined ranking
- ⑩
- TOP-1 article selecting
- ⑪
- Article interpretability processing

⑫

**Message interpretability processing module 124**
- Material template association
- ⑬
- Material statistics data generation
- ⑭
- Material attribute generation
- ⑮
- Push message generation and delivery

**Hot spot mining module 125**
- Material aggregation
- Event extraction
- Hot spot mining
- Data statistics
- Event rankings

**Subscription statistics module 126**
- Subscription statistics
- Subscription dynamics

**Friend circle module 127**
- Friend dynamics
- Friend trending

FIG. 4C

EP 4 481 584 A1

FIG. 4D-1

Terminal
110

Receiving
module
111

Display a push
message

(17)

Start an app

(20)

Template
determining

(21)

Political news

User region

Daily interest

Hourly interest

Subscription
dynamics

Friend social
networking

(22)

Push message
details page

(5)

Terminal user interest calculation module

(4)

Historical
articles browsed
by a user

Article
category
extraction

User interest
calculation

User hourly
interest

User daily
interest

Application app
module 112

(1)

(2)

(3)

**FIG. 4D-2**

EP 4 481 584 A1

## INTERNATIONAL SEARCH REPORT

International application No.

**PCT/CN2023/111959**

### A. CLASSIFICATION OF SUBJECT MATTER

G06F16/335(2019.01)i; G06F9/451(2018.01)i; G06F9/451(2018.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 推送, 消息, 文章, 文案, 新闻, 推荐原因, 再次, 多次, push, message, article, document, news, reason, recommendation, again, multiple times

### C. DOCUMENTS CONSIDERED TO BE RELEVANT

| Category* | Citation of document, with indication, where appropriate, of the relevant passages | Relevant to claim No. |
|---|---|---|
| A | CN 110209952 A (TENCENT TECHNOLOGY (SHENZHEN) CO., LTD.) 06 September 2019 (2019-09-06)<br>  description, paragraphs [0003]-[0030], [0101]-[0168], and [0229-[0237], and figure 23 | 1-21 |
| A | CN 107087235 A (TENCENT TECHNOLOGY (SHENZHEN) CO., LTD.) 22 August 2017 (2017-08-22)<br>  entire document | 1-21 |
| A | CN 114119168 A (CHINA CONSTRUCTION BANK CORPORATION) 01 March 2022 (2022-03-01)<br>  entire document | 1-21 |
| A | CN 114862516 A (ALIBABA (CHINA) CO., LTD.) 05 August 2022 (2022-08-05)<br>  entire document | 1-21 |
| A | CN 109218751 A (GUANGZHOU KUGOU COMPUTER TECHNOLOGY CO., LTD.) 15 January 2019 (2019-01-15)<br>  entire document | 1-21 |
| A | US 2009300547 A1 (KIBBOKO, INC.) 03 December 2009 (2009-12-03)<br>  entire document | 1-21 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 November 2023** | **13 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111959**

| Patent document cited in search report | | | Publication date (day/month/year) | Patent family member(s) | | | Publication date (day/month/year) |
|---|---|---|---|---|---|---|---|
| CN | 110209952 | A | 06 September 2019 | JP | 2022500799 | A | 04 January 2022 |
| | | | | JP | 7216827 | B2 | 01 February 2023 |
| | | | | WO | 2020125660 | A1 | 25 June 2020 |
| | | | | US | 2021240792 | A1 | 05 August 2021 |
| | | | | US | 11321410 | B2 | 03 May 2022 |
| CN | 107087235 | A | 22 August 2017 | US | 2019222899 | A1 | 18 July 2019 |
| | | | | US | 10999634 | B2 | 04 May 2021 |
| | | | | WO | 2018192437 | A1 | 25 October 2018 |
| CN | 114119168 | A | 01 March 2022 | | None | | |
| CN | 114862516 | A | 05 August 2022 | | None | | |
| CN | 109218751 | A | 15 January 2019 | | None | | |
| US | 2009300547 | A1 | 03 December 2009 | CA | 2634020 | A1 | 30 November 2009 |

Form PCT/ISA/210 (patent family annex) (July 2022)

**REFERENCES CITED IN THE DESCRIPTION**

**Patent documents cited in the description**

- CN 202211058865
- CN 202211145480